(19) Europäisches Patentamt
European Patent Office
Office européen des brevets

(11) **EP 2 740 717 A2**

(12) **DEMANDE DE BREVET EUROPEEN**

(43) Date de publication:
**11.06.2014 Bulletin 2014/24**

(21) Numéro de dépôt: **14157518.3**

(22) Date de dépôt: **22.12.2011**

(51) Int Cl.:
**C04B 35/117** (2006.01)  **C04B 35/488** (2006.01)
**C04B 35/626** (2006.01)  **C04B 35/119** (2006.01)
**C09C 1/00** (2006.01)  **C09D 1/00** (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2010 FR 1061019**

(62) Numéro(s) de document de la (des) demande(s) initiale(s) en application de l'article 76 CBE:
**11810692.1 / 2 655 291**

(71) Demandeur: **Saint-Gobain Centre de Recherches et d'Etudes Européen
92400 Courbevoie (FR)**

(72) Inventeur: **Nahas, Nabil
77700 Serris (FR)**

(74) Mandataire: **Nony
3, rue de Penthièvre
75008 Paris (FR)**

Remarques:
Cette demande a été déposée le 03-03-2014 comme demande divisionnaire de la demande mentionnée sous le code INID 62.

(54) **Pièce frittée colorée en céramique**

(57) Mélange particulaire présentant la composition chimique suivante, en pourcentages massiques sur la base des oxydes :
- $ZrO_2$: ≥ 10,0 % ;
- 2 % < Al2O3 ≤ 80 % ;
- 2 à 20,0 % d'un oxyde choisi parmi $Y_2O_3$, $Sc_2O_3$, MgO, CaO, $CeO_2$, et leurs mélanges, la teneur MgO + CaO étant inférieure à 5,0 % ;
- 0 à 18,0% d'un oxyde choisi parmi ZnO, les oxydes de lanthanides excepté $CeO_2$, et leurs mélanges ;
- moins de 12,0 % d'autres oxydes ;
ledit mélange particulaire comportant un pigment, en une quantité comprise entre 0,5 et 10,0 %, en un matériau choisi parmi
- les oxyde(s) de structure pérovskite,
- les oxydes de structure spinelle,
- les oxydes de structure hématite $E_2O_3$, l'élément E étant choisi dans le groupe $G_E(1)$ formé par les mélanges d'aluminium et de chrome, les mélanges d'aluminium et de manganèse, et leurs mélanges
- les oxydes de structure rutile $FO_2$, l'élément F étant choisi dans le groupe $G_F(1)$ formé par les mélanges d'étain et de vanadium, les mélanges de titane et de chrome et de niobium, les mélanges de titane et de chrome et de tungstène, les mélanges de titane et de niobium et de manganèse, les mélanges d'étain et de chrome, et leurs mélanges,
- les orthosilicates choisis dans le groupe formé par les orthosilicates de zirconium et de praséodyme (Zr,Pr)$SiO_4$, les orthosilicates de zirconium et de vanadium (Zr, V)$SiO_4$, et les orthosilicates de zirconium dans lesquels se trouve de l'oxyde de fer en inclusion, et leurs mélanges.

EP 2 740 717 A2

**Description**

**Domaine technique**

L'invention concerne un mélange particulaire, une pièce frittée obtenue à partir d'un tel mélange particulaire et un procédé de fabrication d'une telle pièce frittée.

**Arrière-plan technologique**

Les pièces frittées à base de zircone sont couramment utilisées pour la fabrication d'articles décoratifs tels que des bijoux, des montres, des bracelets, des broches, des épingles de cravate, des colliers, des sacs à main, des téléphones, du mobilier, ou des ustensiles ménagers.

Pour obtenir une couleur, un pigment peut être ajouté. Par exemple, WO 2010024275 décrit un produit de zircone stabilisée pouvant contenir entre 1 et 30 % d'alumine, incorporant un pigment à base d'oxyde de cobalt et d'oxyde de chrome, d'oxyde de nickel ou d'oxyde de fer. JP 2005306678, JP 2004059374 fournissent d'autres exemples de pigments.

Les produits d'alumine-zircone, en particulier ceux présentant une teneur en alumine comprise entre 10 et 50%, sont connus pour présenter de bonnes propriétés mécaniques, notamment de dureté et résistance mécanique.

Un pigment ajouté dans un produit d'alumine-zircone a cependant généralement tendance à se dégrader lors du frittage de l'alumine-zircone du fait des températures de frittage élevées nécessaires, ce qui peut conduire à une modification difficilement contrôlable de la couleur.

Les produits d'alumine-zircone destinés à être des articles décoratifs doivent en outre présenter une bonne résistance aux éraflures et aux chocs, ainsi qu'un bel aspect avec des couleurs bien développées et homogènes. Ils doivent également être biocompatibles, c'est-à-dire de ne pas contenir d'éléments pouvant être relargués et qui pourraient être dangereux pour l'homme.

Il existe un besoin permanent pour de nouvelles pièces frittées céramiques à base d'alumine-zircone présentant ces propriétés et pour des nouveaux procédés de fabrication de telles pièces.

Un but de l'invention est de satisfaire, au moins partiellement, ce besoin.

**Résumé de l'invention**

Selon l'invention, on atteint ce but au moyen d'un mélange particulaire présentant la composition chimique suivante, en pourcentages massiques sur la base des oxydes :

- zircone $ZrO_2$ : $\geq$ 10,0 % ;
- alumine $Al_2O_3 \leq$ 80 % ;
- 2 à 20,0 % d'un oxyde choisi dans le groupe $G_S(1)$ formé par $Y_2O_3$, $Sc_2O_3$, MgO, CaO, $CeO_2$ et leurs mélanges, la teneur totale en MgO et CaO étant inférieure à 5,0 % ;
- 0 à 18,0 % d'un oxyde choisi dans le groupe $G_S(2)$ formé par ZnO, les oxydes de lanthanides excepté $CeO_2$, et leurs mélanges ;
- moins de 12,0 % d'autres oxydes ;

ledit oxyde du groupe $G_S(1)$ et/ou ledit oxyde du groupe $G_S(2)$ et/ou l'alumine pouvant être remplacés, totalement ou en partie, par une quantité équivalente de précurseur(s) de ces oxydes,

ledit mélange particulaire comportant un pigment, en une quantité comprise entre 0,5 et 10,0 %, les particules dudit pigment comportant un matériau choisi parmi

- les oxyde(s) de structure pérovskite, optionnellement remplacé(s), totalement ou en partie, par une quantité équivalente de précurseur(s) de ces oxydes,
- les oxydes de structure spinelle,
- les oxydes de structure hématite $E_2O_3$, l'élément E étant choisi dans le groupe $G_E(1)$ formé par les mélanges d'aluminium et de chrome, les mélanges d'aluminium et de manganèse, et leurs mélanges
- les oxydes de structure rutile $FO_2$, l'élément F étant choisi dans le groupe $G_F(1)$ formé par les mélanges d'étain et de vanadium, les mélanges de titane et de chrome et de niobium, les mélanges de titane et de chrome et de tungstène, les mélanges de titane et de niobium et de manganèse, les mélanges d'étain et de chrome, et leurs mélanges,
- les orthosilicates choisis dans le groupe des orthosilicates de zirconium et de praséodyme $(Zr,Pr)SiO_4$, des orthosilicates de zirconium et de vanadium $(Zr,V)SiO_4$, des orthosilicates de zirconium dans lesquels se trouve de l'oxyde de fer en inclusion, et leurs mélanges.

De préférence, les constituants dudit oxyde de structure pérovskite, spinelle, hématite, rutile ou orthosilicate représentent plus de 98 %, plus de 99 %, voire sensiblement 100 % en masse dudit matériau. De préférence, le Complément à 100 % est constitué d'impuretés.

La teneur en alumine peut être inférieure ou égale à 2 %. De préférence, $Al_2O_3 > 2$ %.

Les inventeurs ont constaté qu'un mélange particulier selon l'invention permet de fabriquer, par frittage, un produit d'alumine-zircone coloré parfaitement adapté à la fabrication d'articles décoratifs.

Un mélange particulier selon l'invention peut encore comporter une, voire plusieurs, des caractéristiques optionnelles suivantes :

- La teneur en zircone est supérieure à 15 %, de préférence supérieure à 20 %, voire supérieure à 30 %, supérieure à 40 %, supérieure à 50 %, supérieure à 60 %, ou supérieure à 70 %, en pourcentage massique.
- La teneur en alumine est supérieure à 5 %, de préférence supérieure à 10 %, voire supérieure à 15 %, supérieure à 20 %, supérieure à 25 %, supérieure à 30 %, en pourcentage massique.
- La teneur totale en $ZrO_2 + Y_2O_3 + Sc_2O_3 + MgO + CaO + CeO_2 + Al_2O_3 + ZnO$ + les oxydes de lanthanides excepté $CeO_2$ est supérieure à 90 %, voire supérieure à 95 % en masse.
- L'oxyde du groupe $G_S(1)$ est choisi dans le groupe formé par $Y_2O_3$, $Sc_2O_3$ et leurs mélanges et, de préférence, la teneur dudit oxyde du groupe $G_S(1)$ est inférieure à 8 %, de préférence inférieure à 6,5 %.
- L'oxyde du groupe $G_S(1)$ est choisi dans le groupe formé par MgO, CaO et leurs mélanges et, de préférence, la teneur dudit oxyde du groupe $G_S(1)$ est inférieure à 4%.
- L'oxyde du groupe $G_S(1)$ est $CeO_2$ et, de préférence, la teneur dudit oxyde du groupe $G_S(1)$ est supérieure à 10 % et inférieure à 15 %.
- L'oxyde du groupe $G_S(1)$ est choisi dans le groupe formé par $Y_2O_3$, $CeO_2$ et leurs mélanges, et, de préférence, respecte de préférence la relation $10 \% \leq 3.Y_2O_3 + CeO_2 \leq 20\%$.
- L'oxyde du groupe $G_S(1)$ est $Y_2O_3$ et, de préférence, sa teneur est supérieure à 3 %, de préférence supérieure à 4 % et/ou inférieure à 8 %, de préférence inférieure à 6,5 %.
- Dans un mode de réalisation, l'oxyde du groupe $G_S(1)$ est un stabilisant de la zircone.
- L'oxyde du groupe $G_S(1)$ est choisi dans le groupe formé par $Y_2O_3$, $Sc_2O_3$ et leurs mélanges et, de préférence, la teneur dudit oxyde du groupe $G_S(1)$ est inférieure à 8 %, de préférence inférieure à 6,5 %, sur la base de la somme de $ZrO_2$, $Y_2O_3$, $Sc_2O_3$, MgO, CaO et $CeO_2$.
- L'oxyde du groupe $G_S(1)$ est choisi dans le groupe formé par MgO, CaO et leurs mélanges et, de préférence, la teneur dudit oxyde du groupe $G_S(1)$ est inférieure à 4 %, sur la base de la somme de $ZrO_2$, $Y_2O_3$, $Sc_2O_3$, MgO, CaO et $CeO_2$.
- L'oxyde du groupe $G_S(1)$ est $CeO_2$ et sa teneur est supérieure à 10 % et inférieure à 15 %, sur la base de la somme de $ZrO_2$, $Y_2O_3$, $Sc_2O_3$, MgO, CaO et $CeO_2$.
- L'oxyde du groupe $G_S(1)$ est choisi dans le groupe formé par $Y_2O_3$, $CeO_2$ et leurs mélanges, et, de préférence, respecte de préférence la relation $10 \% \leq 3.Y_2O_3 + CeO_2 \leq 20$ %, sur la base de la somme de $ZrO_2$, $Y_2O_3$, $Sc_2O_3$, MgO, CaO et $CeO_2$.
- Le stabilisant de la zircone est $Y_2O_3$, c'est-à-dire que le mélange particulier ne comporte que $Y_2O_3$ comme stabilisant de la zircone.
- La teneur en $Y_2O_3$ est supérieure à 3 %, de préférence supérieure à 4 % et/ou inférieure à 8 %, de préférence inférieure à 6,5 %, sur la base de la somme de $ZrO_2$, $Y_2O_3$, $Sc_2O_3$, MgO, CaO et $CeO_2$.
- Le mélange particulier comporte de la zircone stabilisée avec ledit stabilisant, ou un mélange de particules de zircone, stabilisée ou non, et de particules dudit stabilisant, ou un mélange de particules dans lesquelles de la zircone, stabilisée ou non, et dudit stabilisant sont intimement mélangés. Un tel mélange intime peut par exemple être obtenu par co-précipitation ou atomisation, éventuellement consolidé par un traitement thermique. Dans lesdits mélanges, le stabilisant peut être remplacé par une quantité équivalente de précurseur(s) de ce stabilisant.
- La teneur en alumine est supérieure à 10% de préférence supérieure à 15 % et inférieure à 60 %, de préférence inférieure à de préférence inférieure à 50 %, de préférence inférieure à 40 %, de préférence encore inférieure à 30 %. Dans un mode de réalisation particulier, la teneur en alumine est comprise entre 2 % et 10 %. Dans un autre mode de réalisation particulier, la teneur en alumine est comprise entre 10 % et 20 %. Enfin dans un autre mode de réalisation particulier, la teneur en alumine est comprise entre 20 % et 80 %.
- L'oxyde du groupe $G_S(2)$ est choisi dans le groupe formé par ZnO et les oxydes de lanthanides excepté $CeO_2$, et leurs mélanges et, de préférence, la teneur dudit oxyde du groupe $G_S(2)$ est inférieure à 15 %, de préférence inférieure à 10 %, de préférence inférieure à 8 %, de préférence inférieure à 5 %.
- L'oxyde du groupe $G_S(2)$ est $La_2O_3$ et, de préférence, sa teneur est inférieure à 15 %, de préférence inférieure à 10 %, de préférence inférieure à 8 %, de préférence inférieure à 5 %, et/ou de préférence supérieure à 0,5 %.

- Dans un mode de réalisation, l'oxyde du groupe $G_S(2)$ est un stabilisant de l'alumine.
- L'oxyde du groupe $G_S(2)$ est choisi dans le groupe formé par ZnO et les oxydes de lanthanides excepté $CeO_2$, et leurs mélanges et, de préférence, la teneur dudit oxyde du groupe $G_S(2)$ est inférieure à 15 %, de préférence inférieure à 10 %, de préférence inférieure à 8 %, de préférence inférieure à 5 %, sur la base de la somme de $Al_2O_3$, de ZnO et des oxydes de lanthanides excepté $CeO_2$.
- L'oxyde du groupe $G_S(2)$ est $La_2O_3$ et, de préférence, sa teneur est inférieure à 15 %, de préférence inférieure à 10 %, de préférence inférieure à 8 %, de préférence inférieure à 5 %, et/ou de préférence supérieure à 0,5 %, sur la base de la somme de $Al_2O_3$, de ZnO et des oxydes de lanthanides excepté $CeO_2$.
- Le stabilisant de l'alumine est $La_2O_3$, c'est-à-dire que le mélange particulaire ne comporte que $La_2O_3$ comme stabilisant de l'alumine.
- Le mélange particulaire comporte de l'alumine stabilisée avec ledit stabilisant, ou un mélange de particules d'alumine, stabilisée ou non, et de particules dudit stabilisant, ou un mélange de particules dans lesquelles de l'alumine, stabilisée ou non, et dudit stabilisant sont intimement mélangés. Un tel mélange intime peut par exemple être obtenu par co-précipitation ou atomisation, éventuellement consolidé par un traitement thermique. Dans lesdits mélanges, le stabilisant peut être remplacé par une quantité équivalente de précurseur(s) de ce stabilisant.
- Dans un mode de réalisation, le mélange particulaire comporte de l'alumine sous la forme d'un précurseur d'alumine, comme par exemple un hydroxyde d'aluminium, un sel d'aluminium.
- L'alumine du mélange particulaire est de l'alumine alpha.
- Dans un mode de réalisation préféré, le mélange particulaire comporte des particules dans lesquelles la zircone, stabilisée ou non, et du stabilisant de la zircone sont intimement mélangés. De préférence, le mélange particulaire comporte des particules dans lesquelles la zircone, stabilisée ou non, et du stabilisant de la zircone sont intimement mélangés. Un tel mélange intime peut par exemple être obtenu par co-précipitation ou atomisation, éventuellement consolidé par un traitement thermique. Dans lesdits mélanges, le stabilisant peut être remplacé par une quantité équivalente de précurseur(s) de ce stabilisant.
- Le mélange particulaire ne comporte pas de précurseur de stabilisant de zircone.
- Le mélange particulaire présente une taille médiane inférieure à 10 $\mu$m, voire inférieure à 5 $\mu$m, voire inférieure à 3 $\mu$m, voire inférieure à 1 $\mu$m et/ou de préférence supérieure à 0,05 $\mu$m. La taille médiane du mélange particulaire est adaptée au procédé de mise en forme utilisé pour fabriquer la pièce frittée.
- La poudre constituée des particules de pigment présente une taille médiane inférieure à 5 $\mu$m, de préférence inférieure à 1 $\mu$m, de préférence inférieure à 0,5 $\mu$m.
- La teneur en pigment est supérieure à 3 %, de préférence supérieure à 4 %, de préférence supérieure à 5 % et/ou inférieure à 8 %, en pourcentage massique sur la base du mélange particulaire.
- Le mélange particulaire ne contient pas de pigment contenant l'élément aluminium.
- Les oxydes représentent plus de 98 %, plus de 99 %, voire sensiblement 100 % de la masse du mélange particulaire.

Dans un premier mode de réalisation, le pigment est en un oxyde de structure **pérovskite** $ABO_3$ et le mélange particulaire selon l'invention peut encore comporter une, voire plusieurs, des caractéristiques optionnelles suivantes :

- l'élément A au site A de la structure pérovskite est choisi dans le groupe $G_A(1)$ formé par le calcium Ca, le strontium Sr, le baryum Ba, le lanthane La, le praséodyme Pr, le néodyme Nd, le bismuth Bi, le cérium Ce, et leurs mélanges.
- De préférence, A est choisi dans le groupe $G_A(2)$ formé par le lanthane, le praséodyme, le néodyme, le bismuth, le cérium, et leurs mélanges.
- De préférence, A est choisi dans le groupe $G_A(3)$ formé par le lanthane.
- L'élément B au site B de la structure pérovskite est choisi dans le groupe $G_B(1)$ formé par les mélanges de cobalt et de fer, les mélanges de cobalt et de manganèse, les mélanges de cobalt et de chrome, les mélanges de cobalt et de nickel, les mélanges de chrome et de manganèse, les mélanges de chrome et de nickel, les mélanges de chrome et de fer, les mélanges de manganèse et de fer, les mélanges de manganèse et de nickel, les mélanges de nickel et de fer, les mélanges de cobalt et de titane, les mélanges de cobalt et de cuivre, le cobalt, les mélanges de chrome et de titane, les mélanges de chrome et de cuivre, les mélanges de nickel et de titane, le chrome, le nickel, le cuivre, le fer, les mélanges de nickel et de cuivre, et leurs mélanges.
- De préférence, l'élément B est choisi dans le groupe $G_B(2)$ formé par les mélanges de cobalt et de fer, les mélanges de cobalt et de manganèse, les mélanges de chrome et de manganèse, les mélanges de chrome et de fer, les mélanges de cobalt et de chrome et de fer, les mélanges de cobalt et de chrome et de fer et de manganèse, les mélanges de cobalt et de fer et de manganèse, les mélanges de cobalt et de chrome, les mélanges de cobalt et de nickel, les mélanges de cobalt et de titane, les mélanges de cobalt et de cuivre, le cobalt, les mélanges de chrome et de nickel, les mélanges de chrome et de titane, les mélanges de chrome et de cuivre, les mélanges de chrome et de fer et de manganèse, les mélanges de nickel et de fer, les mélanges de nickel et de manganèse, les mélanges de nickel et de cobalt, les mélanges de nickel et de titane, les mélanges de nickel et de cobalt et de chrome, les mélanges de nickel et de cobalt et de chrome et de manganèse, les mélanges de nickel et de chrome et de manganèse, le chrome, le nickel, le cuivre.

- Le taux de pérovskite dans les 0,5 à 10 % de pigment en oxyde(s) de structure pérovskite et/ou en précurseur(s) de tels oxydes est supérieur à 90 %, de préférence supérieur à 95 %, de préférence supérieur à 99 %, de préférence sensiblement 100 %.
- De manière générale, pour une teneur en alumine constante, pour assombrir la couleur, la teneur en pigment en oxyde(s) de structure pérovskite et/ou en précurseur(s) de tels oxydes est de préférence supérieure à 3 %, de préférence supérieure à 4 %, de préférence supérieure à 5 % et/ou de préférence inférieure à 8 %. De manière également générale, pour une teneur en pigment en oxyde(s) de structure pérovskite et/ou en précurseur(s) de tels oxydes constante, la teneur en alumine est augmentée pour éclaircir la couleur.

Dans un deuxième mode de réalisation, le pigment est en un oxyde de structure **spinelle** $CD_2O_4$ ou $D(C,D)O_4$ et le mélange particulaire selon l'invention peut encore comporter une, voire plusieurs, des caractéristiques optionnelles suivantes :

- l'élément C de la structure spinelle est choisi dans le groupe $G_C(1)$ formé par le nickel Ni dans une fraction molaire comprise entre 0 et 0,2 ou dans une fraction molaire égale à 1, le cuivre Cu dans une fraction molaire comprise entre 0 et 0,2, le fer Fe dans une fraction molaire comprise entre 0,2 et 0,6 ou dans une fraction molaire égale à 1, le zinc Zn dans une fraction molaire comprise entre 0 et 0,2 ou dans une fraction molaire égale à 1, le manganèse Mn dans une fraction molaire comprise entre 0 et 0,4, le cobalt Co dans une fraction molaire comprise entre 0 et 0,4 ou dans une fraction molaire comprise entre 0,4 et 1, l'étain Sn dans une fraction molaire comprise entre 0 et 0,2 ou dans une fraction molaire égale à 1, les mélanges de zinc et de fer, les mélanges de fer et de manganèse, les mélanges de zinc et de manganèse, les mélanges de cobalt et de zinc, et leurs mélanges.
- De préférence, l'élément C est choisi dans le groupe $G_C(2)$ formé par le nickel Ni dans une fraction molaire comprise entre 0 et 0,2 ou dans une fraction molaire égale à 1, le fer Fe dans une fraction molaire comprise entre 0,2 et 0,6 ou dans une fraction molaire égale à 1, le zinc Zn dans une fraction molaire égale à 1, le manganèse Mn dans une fraction molaire comprise entre 0 et 0,4, le cobalt Co dans une fraction molaire comprise entre 0 et 0,4 ou dans une fraction molaire comprise entre 0,4 et 1, l'étain Sn dans une fraction molaire comprise entre 0 et 0,2 ou dans une fraction molaire égale à 1, les mélanges de zinc et de fer, les mélanges de fer et de manganèse, les mélanges de zinc et de manganèse, les mélanges de cobalt et de zinc, et leurs mélanges.
- L'élément D de la structure spinelle est choisi dans le groupe $G_D(1)$ formé par le manganèse Mn dans une fraction molaire comprise entre 0 et 0,4, le fer Fe dans une fraction molaire comprise entre 0 et 0,6 ou dans une fraction molaire égale à 1 (c'est-à-dire que D est l'élément Fe), le chrome Cr dans une fraction molaire comprise entre 0,2 et 0,6 et dans une fraction molaire égale à 1, l'aluminium Al dans une fraction molaire comprise entre 0 et 1, le titane Ti dans une fraction molaire comprise entre 0 et 1, le cobalt dans une fraction molaire égale à 1 sauf si l'élément C est le cobalt, les mélanges de fer et de chrome, les mélanges de fer et de chrome et de manganèse, les mélanges de manganèse et de chrome, les mélanges d'aluminium et de chrome, et leurs mélanges.
- De préférence, l'élément D est choisi dans le groupe $G_D(2)$ formé par le manganèse Mn dans une fraction molaire comprise entre 0 et 0,4, le fer Fe dans une fraction molaire comprise entre 0,2 et 0,6 et dans une fraction molaire égale à 1, le chrome Cr dans une fraction molaire comprise entre 0 et 0,6 et dans une fraction molaire égale à 1, l'aluminium Al dans une fraction molaire égale à 1, le titane Ti dans une fraction molaire égale à 1, le cobalt dans une fraction molaire égale à 1 sauf si l'élément C est le cobalt, les mélanges de fer et de chrome, les mélanges de fer et de chrome et de manganèse, les mélanges de manganèse et de chrome, les mélanges d'aluminium et de chrome, et leurs mélanges.
- Le taux de spinelle dans les 0,5 à 10 % de pigment en oxyde(s) de structure spinelle est supérieur à 90 %, de préférence supérieur à 95 %, de préférence supérieur à 99 %, de préférence sensiblement 100 %.
- De manière générale, pour une teneur en alumine constante, pour assombrir la couleur, la teneur en pigment en oxyde(s) de structure spinelle est de préférence supérieure à 3 %, de préférence supérieure à 4 %, de préférence supérieure à 5 % et/ou de préférence inférieure à 8 %. De manière également générale, pour une teneur en pigment en oxyde(s) de structure spinelle constante, la teneur en alumine est augmentée pour éclaircir la couleur.

Dans un troisième mode de réalisation, le pigment est en un oxyde de structure hématite $E_2O_3$, l'élément E étant choisi dans le groupe $G_E(1)$ formé par les mélanges d'aluminium et de chrome, les mélanges d'aluminium et de manganèse, et leurs mélanges, et le mélange particulaire selon l'invention peut encore comporter une, voire plusieurs, des caractéristiques optionnelles suivantes :

- Le taux d'hématite dans les 0,5 à 10 % de pigment en oxyde(s) de structure hématite est supérieur à 90 %, de préférence supérieur à 95 %, de préférence supérieur à 99 %, de préférence sensiblement 100 %.

- De manière générale, pour une teneur en alumine constante, pour assombrir la couleur, la teneur en pigment en oxyde(s) de structure hématite est de préférence supérieure à 3 %, de préférence supérieure à 4 %, de préférence supérieure à 5 % et/ou de préférence inférieure à 8 %. De manière également générale, pour une teneur en pigment en oxyde(s) de structure hématite, la teneur en alumine est augmentée pour éclaircir la couleur.

Dans un quatrième mode de réalisation, le pigment est en un oxyde de structure rutile $FO_2$, l'élément F étant choisi dans le groupe $G_F(1)$ formé par les mélanges d'étain et de vanadium, les mélanges de titane et de chrome et de niobium, les mélanges de titane et de chrome et de tungstène, les mélanges de titane et de niobium et de manganèse, les mélanges d'étain et de chrome, et leurs mélanges, et le mélange particulaire selon l'invention peut encore comporter une, voire plusieurs, des caractéristiques optionnelles suivantes :

- Le taux de rutile dans les 0,5 à 10 % de pigment en oxyde(s) de structure rutile est supérieur à 90 %, de préférence supérieur à 95 %, de préférence supérieur à 99 %, de préférence sensiblement 100 %.
- De manière générale, pour une teneur en alumine constante, pour assombrir la couleur, la teneur en pigment en oxyde(s) de structure rutile est de préférence supérieure à 3 %, de préférence supérieure à 4 %, de préférence supérieure à 5 % et/ou de préférence inférieure à 8 %. De manière également générale, pour une teneur en pigment en oxyde(s) de structure rutile constante, la teneur en alumine est augmentée pour éclaircir la couleur.

Dans un cinquième mode de réalisation, le pigment est en un orthosilicate choisi dans le groupe des orthosilicates de zirconium et de praséodyme $(Zr,Pr)SiO_4$, des orthosilicates de zirconium et de vanadium $(Zr,V)SiO_4$, des orthosilicates de zirconium dans lequel se trouve de l'oxyde de fer en inclusion. De manière générale, pour une teneur en alumine constante, pour assombrir la couleur, la teneur en pigment en orthosilicate(s) est de préférence supérieure à 3 %, de préférence supérieure à 4 %, de préférence supérieure à 5 % et/ou de préférence inférieure à 8 %. De manière également générale, pour une teneur en pigment en orthosilicate(s) constante, la teneur en alumine est augmentée pour éclaircir la couleur.

Dans un mode de réalisation, le pigment est un mélange de plusieurs pigments selon les premier à cinquième modes de réalisation ci-dessus.

Lorsque la couleur **noir ou gris** est recherchée pour la pièce frittée à fabriquer, le pigment peut être choisi de la manière suivante :

- le pigment est en un oxyde de structure pérovskite tel que A et B soient choisis de la manière suivante :
  A peut être choisi dans le groupe $G_A'(1)$ formé par le calcium Ca, le strontium Sr, le baryum Ba, le lanthane La, le praséodyme Pr, le néodyme Nd, le bismuth Bi, le cérium Ce, et leurs mélanges.
  De préférence, A est choisi dans le groupe $G_A'(2)$ formé par le lanthane, le praséodyme, le néodyme, le bismuth, le cérium, et leurs mélanges.
  De préférence encore, A est choisi dans le groupe $G_A'(3)$ formé par le lanthane.
  B peut être choisi dans le groupe $G_B'(1)$ formé par les mélanges de cobalt et de fer $Co_x Fe_{1-x}$, avec x compris entre 0,2 et 0,4, les mélanges de cobalt et de manganèse $Co_x Mn_{1-x}$, avec x compris entre 0,2 et 0,4, les mélanges de chrome et de manganèse $Cr_x Mn_{1-x}$, avec x compris entre 0,2 et 0,4, les mélanges de chrome et de fer $Cr_x Fe_{1-x}$, avec x compris entre 0,3 et 0,5, les mélanges de manganèse et de fer $Mn_x Fe_{1-x}$, avec x compris entre 0,4 et 0,7, les mélanges de nickel et de fer $Ni_x Fe_{1-x}$, avec x compris entre 0,4 et 0,7, et leurs mélanges.
  De préférence, B est choisi dans le groupe $G_B'(2)$ formé par les mélanges de cobalt et de chrome et de fer $Co_x Cr_y Fe_z$, avec x compris entre 0,1 et 0,3, y compris entre 0,1 et 0,3 et z compris entre 0,4 et 0,8 et x+y+z=1, les mélanges de cobalt et de chrome et de fer et de manganèse $Co_x Cr_y Fe_z Mn_t$, avec x compris entre 0,1 et 0,2, y compris entre 0,1 et 0,2, z compris entre 0,3 et 0,5 et t compris entre 0,3 et 0,5 et x+y+z+t=1, les mélanges de cobalt et de fer et de manganèse $Co_x Fe_y Mn_z$, avec x compris entre 0,1 et 0,3, y compris entre 0,4 et 0,6 et z compris entre 0,4 et 0,5 et x+y+z=1.
  (R1): Lorsque la couleur **noir** est recherchée pour la pièce frittée à fabriquer, un mélange particulaire selon l'invention peut en comporter une quantité de pigment en oxyde(s) de structure pérovskite et/ou de précurseur(s) de tels oxydes, A et B étant de préférence choisis dans les groupes $G_A'$ (1) à (3) et $G_B'$ (1) à (2) ci-dessus :

- supérieure à 3 % si la quantité d'alumine du mélange particulaire est inférieure à 10 %, et/ou

- supérieure à 4 % si la quantité d'alumine du mélange particulaire est inférieure à 20 %, et/ou

- supérieure à 5 % si la quantité d'alumine du mélange particulaire est inférieure à 80 %, et/ou

- de préférence inférieure à 8 %.

(R2) : Lorsque la couleur **gris** est recherchée pour la pièce frittée à fabriquer, un mélange particulaire selon l'invention peut en comporter une quantité de pigment d'oxyde(s) de structure pérovskite et/ou de précurseur(s) de tels oxydes, A et B étant de préférence choisis dans les groupes $G_A$' (1) à (3) et et $G_B$' (1) à (2) ci-dessus :

- inférieure à 3 % si la quantité d'alumine du mélange particulaire est comprise entre 2 % et 10 %, et/ou

- inférieure à 4 % si la quantité d'alumine du mélange particulaire est comprise entre 10 % et 20 %, et/ou

- inférieure à 5 % si la quantité d'alumine du mélange particulaire est comprise entre 20 % et 80 %.

- le pigment est un oxyde de structure **spinelle** tel que C et D soient choisis de la manière suivante :
C peut être choisi dans le groupe $G_C$'(1) formé par le nickel Ni dans une fraction molaire comprise entre 0 et 0,2, le cuivre Cu dans une fraction molaire comprise entre 0 et 0,2, le fer Fe dans une fraction molaire comprise entre 0,2 et 0,6, le zinc Zn dans une fraction molaire comprise entre 0 et 0,2, le manganèse Mn dans une fraction molaire comprise entre 0 et 0,4, le cobalt Co dans une fraction molaire comprise entre 0 et 0,4, et leurs mélanges.
De préférence, C est choisi dans le groupe $G_C$'(2) formé par le nickel Ni dans une fraction molaire comprise entre 0 et 0,2, le fer Fe dans une fraction molaire comprise entre 0,2 et 0,6, le manganèse Mn dans une fraction molaire comprise entre 0 et 0,4, le cobalt Co dans une fraction molaire comprise entre 0 et 0,4, et leurs mélanges.
D peut être choisi dans le groupe $G_D$'(1) formé par le manganèse Mn dans une fraction molaire comprise entre 0 et 0,4, le fer Fe dans une fraction molaire comprise entre 0,2 et 0,6, le chrome Cr dans une fraction molaire comprise entre 0,2 et 0,6, l'aluminium Al dans une fraction molaire comprise entre 0 et 0,4, le titane Ti dans une fraction molaire comprise entre 0 et 0,4, et leurs mélanges.
De préférence, D est choisi dans le groupe $G_D$'(2) formé par le manganèse Mn dans une fraction molaire comprise entre 0 et 0,4, le fer Fe dans une fraction molaire comprise entre 0,2 et 0,6, le chrome Cr dans une fraction molaire comprise entre 0,2 et 0,6, et leurs mélanges.
(R3) : Lorsque la couleur **noir** est recherchée pour la pièce frittée à fabriquer, un mélange particulaire selon l'invention peut en comporter une quantité de pigment en oxyde(s) de structure spinelle, C et D étant de préférence choisis dans les groupes $G_C$' (1) à (2) et et $G_D$' (1) à (2) ci-dessus, supérieure à 3 %.
(R4) : Lorsque la couleur **gris** est recherchée pour la pièce frittée à fabriquer, un mélange particulaire selon l'invention peut en comporter une quantité de pigment d'oxyde(s) de structure spinelle, C et D étant de préférence choisis dans les groupes $G_C$' (1) à (2) et $G_D$' (1) à (2) ci-dessus, inférieure à 3 %.

Lorsque la couleur **bleu** est recherchée pour la pièce frittée à fabriquer, le pigment peut être choisi de la manière suivante :

- (R5) : le pigment est un oxyde de structure **pérovskite** tel que A et B soient choisis de la manière suivante :
A peut être choisi dans le groupe $G_A$"(1) formé par le calcium Ca, le strontium Sr, le baryum Ba, le lanthane La, le praséodyme Pr, le néodyme Nd, le bismuth Bi, le cérium Ce, et leurs mélanges.
De préférence, A est choisi dans le groupe $G_A$"(2) formé par le lanthane, le praséodyme, le néodyme, le bismuth, le cérium, et leurs mélanges.
De préférence encore, A est choisi dans le groupe $G_A$"(3) formé par le lanthane.
B peut être choisi dans le groupe $G_B$"(1) formé par les mélanges de cobalt et de fer $Co_x Fe_{1-x}$, avec x compris entre 0,5 et 0,95, les mélanges de cobalt et de manganèse $Co_x Mn_{1-x}$, avec x compris entre 0,5 et 0,95, les mélanges de cobalt et de chrome $Co_x Cr_{1-x}$, avec x compris entre 0,5 et 0,95, les mélanges de cobalt et de nickel $Co_x Ni_{1-x}$, avec x compris entre 0,5 et 0,95, les mélanges de cobalt et de titane $Co_x Ti_{1-x}$, avec x compris entre 0,5 et 0,95, les mélanges de cobalt et de cuivre $Co_x Cu_{1-x}$, avec x compris entre 0,5 et 0,95, le cobalt, et leurs mélanges.
De préférence, B est choisi dans le groupe $G_B$"(2) formé par les mélanges de cobalt et de fer $Co_x Fe_{1-x}$, avec x compris entre 0,8 et 0,95, les mélanges de cobalt et de manganèse $Co_x Mn_{1-x}$, avec x compris entre 0,8 et 0,95, les mélanges de cobalt et de chrome $Co_x Cr_{1-x}$, avec x compris entre 0,8 et 0,95, les mélanges de cobalt et de nickel $Co_x Ni_{1-x}$, avec x compris entre 0,8 et 0,95, les mélanges de cobalt et de titane $Co_x Ti_{1-x}$, avec x compris entre 0,8 et 0,95, les mélanges de cobalt et de cuivre $Co_x Cu_{1-x}$, avec x compris entre 0,8 et 0,95, le cobalt, les mélanges de cobalt et de chrome et de fer $Co_x Cr_y Fe_z$, avec x compris entre 0,5 et 0,8, y compris entre 0,1 et 0,4 et z compris entre 0,1 et 0,4 et x+y+z=1, les mélanges de cobalt et de chrome et de fer et de manganèse $Co_x Cr_y Fe_z Mn_t$, avec x compris entre 0,5 et 0,7, y compris entre 0,1 et 0,3, z compris entre 0,1 et 0,3 et t compris entre 0,1 et 0,3 et x+y+z+t=1, les mélanges de cobalt et de fer et de manganèse $Co_x Fe_y Mn_z$, avec x compris entre 0,5 et 1, y compris entre 0,1 et 0,4 et z compris entre 0,1 et 0,4 et x+y+z=1.
(R6) : Lorsque la couleur **bleu foncé** est recherchée pour la pièce frittée à fabriquer, un mélange particulaire selon l'invention peut en comporter une quantité de pigment en oxyde(s) de structure pérovskite et/ou en précurseur(s) de tels oxydes, A et B étant de préférence choisis dans les groupes $G_A''$ (1) à (3) et $G_B''$ (1) à (2) ci-dessus :

- supérieure à 3 % si la quantité d'alumine du mélange particulaire est inférieure à 10%, et/ou

- supérieure à 4 % si la quantité d'alumine du mélange particulaire est inférieure à 20 %, et/ou

- supérieure à 5 % si la quantité d'alumine du mélange particulaire est inférieure à 80 %, et/ou

- de préférence inférieure à 8 %.

(R7) : Lorsque la couleur **bleu clair** est recherchée pour la pièce frittée à fabriquer, un mélange particulaire selon l'invention peut en comporter une quantité de pigment en oxyde(s) de structure pérovskite et/ou en précurseur(s) de tels oxydes, A et B étant de préférence choisis dans les groupes $G_A''$ (1) à (3) et et $G_B''$ (1) à (2) ci-dessus :

- inférieure à 3 % si la quantité d'alumine du mélange particulaire est comprise entre 2 % et 10 %, et/ou

- inférieure à 4 % si la quantité d'alumine du mélange particulaire est comprise entre 10 % et 20 %, et/ou

- inférieure à 5 % si la quantité d'alumine du mélange particulaire est comprise entre 20 % et 80%.

- (R8) : le pigment est un oxyde de structure **spinelle** tel que C et D soient choisis de la manière suivante :
C peut être choisi dans le groupe $G_C''$(1) formé par le nickel Ni dans une fraction molaire comprise entre 0 et 0,2, le zinc Zn dans une fraction molaire comprise entre 0 et 0,2, le cobalt Co dans une fraction molaire comprise entre 0,4 et 1, l'étain Sn dans une fraction molaire comprise entre 0 et 0,2 et dans une fraction molaire égale à 1, les mélanges de cobalt et de zinc, et leurs mélange.
De préférence, C est choisi dans le groupe $G_C''$(2) formé par le cobalt Co dans une fraction molaire égale à 1, l'étain Sn dans une fraction molaire égale à 1, les mélanges de cobalt et de zinc, et leurs mélanges.
D peut être choisi dans le groupe $G_D''$(1) formé par le chrome Cr dans une fraction molaire comprise entre 0 et 0,4, l'aluminium Al dans une fraction molaire comprise entre 0 et 1, le titane Ti dans une fraction molaire comprise entre 0 et 1, le cobalt dans une fraction molaire égale à 1 sauf si l'élément C est le cobalt, les mélanges d'aluminium et de chrome, et leurs mélanges.
De préférence, D est choisi dans le groupe $G_D''$(2) formé par l'aluminium Al dans une fraction molaire égale à 1, le cobalt dans une fraction molaire égale à 1 sauf si l'élément C est le cobalt, les mélanges d'aluminium et de chrome, et leurs mélanges.
De préférence, l'oxyde de structure spinelle est choisi dans le groupe formé par $Co_2SnO_4$, $CoAl_2O_4$, $Co(Cr,Al)_2O_4$, $(Co,Zn)Al_2O_4$ et leurs mélanges.

- (R9) : le pigment est un orthosilicate de zirconium et de vanadium $(Zr,V)SiO_4$.

Lorsque la couleur **vert** est recherchée pour la pièce frittée à fabriquer, le pigment peut être choisi de la manière suivante :

- (R10) : le pigment est un oxyde de structure **pérovskite** tel que A et B soient choisis de la manière suivante :
A peut être choisi dans le groupe $G_A'''$(1) formé par le calcium Ca, le strontium Sr, le baryum Ba, le lanthane La, le praséodyme Pr, le néodyme Nd, le bismuth Bi, le cérium Ce, et leurs mélanges.
De préférence, A est choisi dans le groupe $G_A'''$(2) formé par le lanthane, le praséodyme, le néodyme, le bismuth, le cérium, et leurs mélanges.
De préférence encore, A est choisi dans le groupe $G_A'''$(3) formé par le lanthane. B peut être choisi dans le groupe $G_B'''$(1) formé par les mélanges de chrome et de fer $Cr_x Fe_{1-x}$, avec x compris entre 0,5 et 0,95, les mélanges de chrome et de manganèse $Cr_x Mn_{1-x}$, avec x compris entre 0,5 et 0,95, les mélanges de chrome et de cobalt $Cr_x Co_{1-x}$, avec x compris entre 0,5 et 0,95, les mélanges de chrome et de nickel $Cr_x Ni_{1-x}$, avec x compris entre 0,5 et 0,95, les mélanges de chrome et de titane $Cr_x Ti_{1-x}$, avec x compris entre 0,5 et 0,95, les mélanges de chrome et de cuivre $Cr_x Cu_{1-x}$, avec x compris entre 0,5 et 0,95, les mélanges de nickel et de fer $Ni_x Fe_{1-x}$, avec x compris entre 0,5 et 0,95, les mélanges de nickel et de manganèse $Ni_x Mn_{1-x}$, avec x compris entre 0,5 et 0,95, les mélanges de nickel et de cobalt $Ni_x Co_{1-x}$, avec x compris entre 0,5 et 0,95, les mélanges de nickel et de titane $Ni_x Ti_{1-x}$, avec x compris entre 0,5 et 0,95, le chrome, le nickel, et leurs mélanges.
De préférence, B est choisi dans le groupe $G_B'''$(2) formé par les mélanges de chrome et de fer $Cr_x Fe_{1-x}$, avec x compris entre 0,8 et 0,95, les mélanges de chrome et de manganèse $Cr_x Mn_{1-x}$, avec x compris entre 0,8 et 0,95, les mélanges de chrome et de cobalt $Cr_x Co_{1-x}$, avec x compris entre 0,8 et 0,95, les mélanges de chrome et de nickel $Cr_x Ni_{1-x}$, avec x compris entre 0,8 et 0,95, les mélanges de chrome et de titane $Cr_x Ti_{1-x}$, avec x compris entre 0,8 et 0,95, les mélanges de chrome et de cuivre $Cr_x Cu_{1-x}$, avec x compris entre 0,8 et 0,95, les mélanges de chrome et de cobalt et de fer $Cr_x Co_y Fe_z$, avec x compris entre 0,5 et 0,7, y compris entre 0,2 et 0,4 et z compris entre 0,1 et 0,3 et x+y+z=1, les mélanges de chrome et de cobalt et de fer et de manganèse $Cr_x Co_y Fe_z Mn_t$, avec x compris entre 0,5 et 0,6, y compris entre 0,2 et 0,3, z compris entre 0,1 et 0,3 et t compris entre 0,1 et 0,3 et x+y+z+t=1, les mélanges de chrome et de fer et de manganèse $Cr_x Fe_y Mn_z$, avec x compris entre 0,6 et 0,8, y compris entre 0,1 et 0,3 et z compris entre 0,1 et 0,4 et x+y+z=1, les mélanges de nickel et de fer $Ni_x Fe_{1-x}$, avec x compris entre 0,8 et 0,95, les mélanges de nickel et de manganèse $Ni_x Mn_{1-x}$, avec x compris entre 0,8 et 0,95, les mélanges de nickel et de cobalt $Ni_x Co_{1-x}$, avec x compris entre 0,8 et 0,95, les mélanges de nickel et de titane $Ni_x Ti_{1-x}$, avec x compris entre 0,8 et 0,95, les mélanges de nickel et de cobalt et de chrome $Ni_x Co_y Cr_z$, avec x compris entre 0,5 et 0,8, y compris entre 0,1 et 0,4, z compris entre 0,1 et 0,4 et x+y+z=1, les mélanges de nickel et de cobalt et de chrome et de manganèse $Ni_x Co_y Cr_z Mn_t$, avec x compris entre 0,5 et 0,7, y compris entre 0,1 et 0,3, z compris entre 0,1 et 0,3 et t compris entre 0,1 et 0,3 et x+y+z+t=1, les mélanges de nickel et de chrome et de manganèse $Ni_x Cry Mn_z$, avec x compris entre 0,5 et 0,8, y compris entre 0,1 et 0,4, z compris entre 0,1 et 0,4 et x+y+z=1, le chrome, le nickel.

(R11) : Lorsque la couleur **vert foncé** est recherchée pour la pièce frittée à fabriquer, un mélange particulaire selon l'invention peut en comporter une quantité de poudre d'oxyde(s) de structure pérovskite et/ou de précurseur(s) de tels oxydes, A et B étant de préférence choisis dans les groupes GA''' (1) à (3) et $G_B'''$ (1) à (2) ci-dessus :

- supérieure à 3 % si la quantité d'alumine du mélange particulaire est inférieure à 10 %, et/ou

- supérieure à 4 % si la quantité d'alumine du mélange particulaire est inférieure à 20 %, et/ou

- supérieure à 5 % si la quantité d'alumine du mélange particulaire est inférieure à 80 %, et/ou

- de préférence inférieure à 8 %.

(R12) : Lorsque la couleur **vert clair** est recherchée pour la pièce frittée à fabriquer, un mélange particulaire selon l'invention peut en comporter une quantité de poudre d'oxyde(s) de structure pérovskite et/ou de précurseur(s) de tels oxydes, A et B étant de préférence choisis dans les groupes $G_A'''$ (1) à (3) et et $G_B'''$ (1) à (2) ci-dessus :

- inférieure à 3 % si la quantité d'alumine du mélange particulaire est comprise entre 2 % et 10%, et/ou

- inférieure à 4 % si la quantité d'alumine du mélange particulaire est comprise entre 10% et 20 %, et/ou

- inférieure à 5 % si la quantité d'alumine du mélange particulaire est comprise entre 20 % et 80 %.

- (R13) : le pigment est un oxyde de structure **spinelle** choisi dans le groupe formé par $CoCr_2O_4$, $TiCo_2O_4$, et leurs mélanges.

(R14) : Lorsque la couleur **turquoise** est recherchée pour la pièce frittée à fabriquer, le pigment peut être un pigment de structure **pérovskite** tel que A et B soient choisis de la manière suivante :
A peut être choisi dans le groupe $G_A^{4'}(1)$ formé par le calcium Ca, le strontium Sr, le baryum Ba, le lanthane La, le praséodyme Pr, le néodyme Nd, le bismuth Bi, le cérium Ce, et leurs mélanges.
De préférence, A est choisi dans le groupe $G_A^{4'}(2)$ formé par le lanthane, le praséodyme, le néodyme, le bismuth, le cérium, et leurs mélanges.
De préférence encore, A est choisi dans le groupe $G_A^{4'}(3)$ formé par le lanthane La. B peut être choisi dans le groupe $G_B^{4'}(1)$ formé par les mélanges de chrome et de cobalt $Cr_x Co_{1-x}$, avec x compris entre 0,3 et 0,8, les mélanges de nickel et de cobalt $Ni_x Co_{1-x}$, avec x compris entre 0,3 et 0,8, les mélanges de chrome et de cuivre $Cr_x Cu_{1-x}$, avec x compris entre 0,3 et 0,8, les mélanges de nickel et de cuivre $Ni_x Cu_{1-x}$, avec x compris entre 0,3 et 0,8, les mélanges de nickel et de titane $Ni_x Ti_{1x}$, avec x compris entre 0,3 et 0,8, le cuivre, et leurs mélanges.
De préférence, B est choisi dans le groupe $G_B^{4'}(2)$ formé par les mélanges de chrome et de cobalt $Cr_x Co_{1-x}$, avec x compris entre 0,4 et 0,6, les mélanges de nickel et de cobalt $Ni_x Co_{1-x}$, avec x compris entre 0,4 et 0,6, les mélanges de nickel et de cobalt et de chrome $Ni_x Co_y Cr_z$, avec x compris entre 0,2 et 0,3, y compris entre 0,4 et 0,6 et z compris entre 0,2 et 0,3 et x+y+z=1, et le cuivre.
Lorsque la couleur turquoise est recherchée pour la pièce frittée à fabriquer, un mélange particulaire selon l'invention peut en particulier comporter une quantité de poudre d'oxyde(s) de structure pérovskite et/ou de précurseur(s) de tels oxydes supérieure à 3 %, de préférence supérieure à 4 %, et/ou inférieure à 6 %, A et B étant de préférence choisis dans les groupes $G_A^{4'}$ (1) à (3) et $G_B^{4'}$ (1) à (2) ci-dessus.

Lorsque la couleur **orange** est recherchée pour la pièce frittée à fabriquer, le pigment peut être choisi de la manière suivante :

- (R15) : le pigment est un oxyde de structure **pérovskite** tel que A et B soient choisis de la manière suivante :
  A peut être choisi dans le groupe $G_A^{5'}(1)$ formé par le calcium Ca, le strontium Sr, le baryum Ba, le lanthane La, le praséodyme Pr, le néodyme Nd, le bismuth Bi, le cérium Ce, et leurs mélanges.
  De préférence, A est choisi dans le groupe $G_A^{5'}(2)$ formé par le lanthane, le praséodyme, le bismuth, le cérium, et leurs mélanges.
  B peut être choisi dans le groupe $G_B^{5'}(1)$ formé par le fer.
- (R16) : le pigment est un oxyde de structure **rutile** tel que F est choisi dans le groupe $G_F'(1)$ formé par les mélanges de titane et de chrome et de niobium, les mélanges de titane et de chrome et de tungstène, et leurs mélanges.

Lorsque la couleur **marron** est recherchée pour la pièce frittée à fabriquer, le pigment peut être choisi de la manière suivante :

- (R17) : le pigment est un oxyde de structure **pérovskite** tel que A et B soient choisis de la manière suivante :
  A peut être choisi dans le groupe $G_A^{6'}(1)$ formé par le calcium Ca, le strontium Sr, le baryum Ba, le lanthane La, le praséodyme Pr, le néodyme Nd, le bismuth Bi, le cérium Ce, et leurs mélanges.
  De préférence, A est choisi dans le groupe $G_A^{6'}(2)$ formé par le lanthane, le praséodyme, le néodyme, le bismuth, le cérium, et leurs mélanges.
  De préférence, A est choisi dans le groupe $G_A^{6'}(3)$ formé par le lanthane.
  B peut être choisi dans le groupe $G_B^{6'}(1)$ formé par formé par les mélanges de chrome et de fer $Cr_x Fe_{1-x}$, avec x compris entre 0,05 et 0,5, les mélanges de nickel et de fer $Ni Fe_{1-x}$, avec x compris entre 0,05 et 0,5, les mélanges de manganèse et de fer $Mn_x Fe_{1-x}$, avec x compris entre 0,05 et 0,5, et leurs mélanges.
  (R18) : Lorsque la couleur **marron foncé** est recherchée pour la pièce frittée à fabriquer, un mélange particulaire selon l'invention peut en comporter une quantité de poudre d'oxyde(s) de structure pérovskite et/ou de précurseur(s) de tels oxydes, A et B étant de préférence choisis dans les groupes $G_A^{6'}(1)$ à (3) et $G_B^{6'}(1)$ ci-dessus :

  - supérieure à 3 % si la quantité d'alumine du mélange particulaire est inférieure à 10 %, et/ou

  - supérieure à 4 % si la quantité d'alumine du mélange particulaire est inférieure à 20 %, et/ou

  - supérieure à 5 % si la quantité d'alumine du mélange particulaire est inférieure à 80 %, et/ou

  - de préférence inférieure à 8 %.

(R19) : Lorsque la couleur **marron clair** est recherchée pour la pièce frittée à fabriquer, un mélange particulaire selon l'invention peut en comporter une quantité de poudre d'oxyde(s) de structure pérovskite et/ou de précurseur(s) de tels oxydes, A et B étant de préférence choisis dans les groupes $G_A^{6'}(1)$ à (3) et $G_B^{6'}(1)$ ci-dessus :

  - inférieure à 3 % si la quantité d'alumine du mélange particulaire est comprise entre 2 % et 10 %, et/ou

  - inférieure à 4 % si la quantité d'alumine du mélange particulaire est comprise entre 10 % et 20 %, et/ou

  - inférieure à 5 % si la quantité d'alumine du mélange particulaire est comprise entre 20 % et 80%.

- (R20) : le pigment est un oxyde de structure **spinelle** choisi dans le groupe formé par $Fe(Fe,Cr)_2O_4$, $Fe_2TiO_4$, $NiFe_2O_4$, $(Zn,Fe)Fe_2O_4$, $(Fe,Mn)(Fe,Mn,Cr)_2O_4$, $(Zn,Mn)(Mn,Cr)_2O_4$ et leurs mélanges.

- (R21) : le pigment est un oxyde de structure **rutile** tel que F soit choisi dans le groupe $G_F''(1)$ formé par les mélanges de titane et de niobium et de manganèse.

Lorsque la couleur **rouge** est recherchée pour la pièce frittée à fabriquer, le pigment peut être choisi de la manière suivante :

- (R22) : le pigment est un oxyde de structure **spinelle** tel que C et D soient choisis de la manière suivante :
  L'élément C au site C de la structure spinelle est le zinc Zn.
  L'élément D au site D de la structure spinelle est les mélanges d'aluminium et de chrome.

- (R23) : le pigment est un oxyde de structure **hématite** tel que l'élément E au site E de la structure hématite est choisi dans le groupe $G_E(1)$ formé par les mélanges d'aluminium et de chrome, d'aluminium et de manganèse.

- (R24) : le pigment est un oxyde de structure **rutile** tel que F soit choisi dans le groupe $G_F'''(1)$ formé par les mélanges d'étain et de chrome.

- (R25) : le pigment est un orthosilicate de zirconium dans lequel se trouve de l'oxyde de fer en inclusion.

Lorsque la couleur **violet** est recherchée pour la pièce frittée à fabriquer, le pigment peut être choisi de la manière suivante :

- (R26) : le pigment est un oxyde de structure **pérovskite** tel que A et B soient choisis de la manière suivante :
  A peut être choisi dans le groupe $G_A^{7'}(1)$ formé par le calcium Ca, le strontium Sr, le baryum Ba, le lanthane La, le praséodyme Pr, le néodyme Nd, le bismuth Bi, le cérium Ce, et leurs mélanges.
  De préférence, A est choisi dans le groupe $G_A^{7'}(2)$ formé par le lanthane, le néodyme, et leurs mélanges.
  B peut être choisi dans le groupe $G_B^{7'}(1)$ formé par les mélanges de cobalt et de manganèse $Co_x Mn_{1-x}$, avec x compris entre 0,05 et 0,2.

Lorsque la couleur **jaune** est recherchée pour la pièce frittée à fabriquer, le pigment peut être choisi de la manière suivante :

- (R27) : le pigment est un oxyde de structure **rutile** tel que F soit choisi dans le groupe $G_F^{4'}(1)$ formé par les mélanges d'étain et de vanadium.

- (R28) : le pigment est un **orthosilicate** de zirconium et de praséodyme $(Zr,Pr)SiO_4$.

L'invention concerne aussi un ensemble comportant un mélange particulaire selon l'invention et une notice, par exemple sous la forme d'une étiquette apposée sur un conditionnement du mélange particulaire ou d'un livret joint au mélange particulaire, la notice indiquant que le mélange particulaire est destiné à la fabrication de pièces frittées décoratives.

La notice peut par exemple indiquer « *poudre pour céramique décorative* », ou « *poudre pour céramique colorée* ».

De préférence, la notice fournit une ou plusieurs des instructions suivante

- Comment transformer le mélange particulaire en pièce céramique (par exemple dosage, conditions de frittage ; précautions techniques, notamment pour assurer une uniformité de la couleur) ;

- Comment polir la pièce céramique ;

- Comment vérifier la couleur de la pièce céramique.

Le conditionnement peut être par exemple un sac, par exemple de type « big bag », un bidon, un fût, ou un carton.

L'invention concerne également un procédé de fabrication d'une pièce frittée comportant les étapes suivantes :

a) mélange de matières premières pour former une charge de départ,
b) mise en forme d'une préforme à partir de ladite charge de départ,
c) frittage de ladite préforme de manière à obtenir ladite pièce frittée,
d) optionnellement, polissage de ladite pièce frittée, de préférence jusqu'à ce que la rugosité Ra de surface soit inférieure à 0,05 $\mu$m, de préférence inférieure à 0,02 $\mu$m, de préférence encore inférieure à 0,01 $\mu$m,
e) optionnellement, vérification de la couleur de la pièce frittée, notamment par mesure des paramètres L* et/ou a*, et/ou b*,

remarquable en ce que la charge de départ comporte un mélange particulaire conforme à l'invention.

Dans un mode de réalisation préféré, la charge de départ à l'étape a) (et notamment la nature et la composition du pigment) est déterminée en fonction d'une couleur recherchée pour ladite pièce frittée.

De préférence, on ajoute, dans la charge de départ, une poudre d'oxyde(s) de structure pérovskite et/ou d'oxydes de structure spinelle, et/ou une poudre d'oxyde de structure hématite $E_2O_3$, l'élément E étant choisi dans le groupe $G_E(1)$ formé par les mélanges d'aluminium et de chrome, les mélanges d'aluminium et de manganèse, et leurs mélanges, et/ou une poudre d'oxyde de structure rutile $FO_2$, l'élément F étant choisi dans le groupe $G_F(1)$ formé par les mélanges d'étain et de vanadium, les mélanges de titane et de chrome et de niobium, les mélanges de titane et de chrome et de tungstène, les mélanges de titane et de niobium et de manganèse, les mélanges d'étain et de chrome, et leurs mélanges, et/ou une poudre d'un orthosilicate choisi dans le groupe des orthosilicates de zirconium et de praséo-dyme $(Zr,Pr)SiO_4$, des orthosilicates de zirconium et de vanadium $(Zr,V)SiO_4$, des orthosilicates de zirconium dans lesquels se trouve de l'oxyde de fer en inclusion,
la quantité et la nature du ou desdits orthosilicate(s) et/ou du ou desdits oxyde(s) de structure pérovskite et/ou du ou desdits oxyde(s) de structure spinelle et/ou du ou desdits oxyde(s) de structure hématite et/ou du ou desdits oxyde(s) de structure rutile étant déterminées en fonction de ladite couleur,
le ou les oxyde(s) de structure pérovskite pouvant être remplacés, totalement ou en partie, par une quantité équivalente de précurseur(s) de ces oxydes.

La quantité et la nature du ou desdits orthosilicate(s) et/ou du ou desdits oxyde(s) de structure pérovskite et/ou du ou desdits oxyde(s) de structure spinelle et/ou du ou desdits oxyde(s) de structure hématite et/ou du ou desdits oxyde(s) de structure rutile peuvent être notamment déterminées suivant les règles, notamment (R1) à (R29), et leurs variantes définies ci-dessus.

L'adaptation de la charge de départ pour respecter ces règles ne pose pas de difficulté particulière.

Cependant, il est également possible d'obtenir, à l'issue de l'étape c), une pièce frittée d'une couleur déterminée en ajoutant dans la charge de départ des poudres de pigments décrites ci-dessus comme appropriées pour obtenir d'autres couleurs. A titre d'exemple, une pièce frittée de couleur vert peut être obtenue selon le procédé en ajoutant dans la charge de départ un orthosilicate de zirconium et de praséodyme $(Zr,Pr)SiO_4$ décrit ci-dessus comme approprié pour obtenir une couleur jaune, et un orthosilicate de zirconium et de vanadium $(Zr,V)SiO_4$ décrit ci-dessus comme approprié pour obtenir une couleur bleu.

Ce procédé peut être notamment mis en oeuvre pour fabriquer un article décoratif selon l'invention.

En particulier, ce procédé peut être utilisé pour fabriquer une pièce frittée dont la somme des teneurs en alumine et en zircone est supérieure à 70 %, en pourcentage massique sur la base des oxydes, et présentant une couleur déterminée.

De préférence, le procédé est mis en ceuvre pour la fabrication d'une pluralité de pièces frittées, une étape e) de vérification de la couleur est mise en oeuvre sur un échantillonnage desdites pièces frittées, et la charge de départ est adaptée en fonction de la différence entre la couleur des pièces frittées de l'échantillon et la couleur recherchée afin que la couleur des pièces frittées fabriquées ultérieurement soient plus proches de la couleur recherchée.

De préférence, on modifie la charge de départ de manière que l'indice ΔE évaluant la différence de couleur entre les pièces frittées fabriquées et la couleur recherchée soit inférieur à 5, inférieur à 2, voire inférieur à 1.

Dans un mode de réalisation, la charge de départ contient des particules dans lesquelles de la zircone, stabilisée ou non, et un oxyde choisi dans le groupe $G_S(1)$ (un mélange d'oxydes étant lui-même « un oxyde ») sont intimement mélangés, et une poudre d'alumine, stabilisée ou non, et un oxyde choisi dans le groupe $G_S(2)$ sont intimement mélangés.

A l'étape c), la préforme est frittée, de préférence sous air, de préférence à pression atmosphérique ou sous pression (pressage à chaud (« Hot Pressing » en anglais) ou pressage isostatique à chaud (« Hot Isostatic Pressing » en anglais, ou HIP)) et à une température comprise entre 1200°C et 1500°C, de préférence supérieure à 1350°C, voire 1400°C et/ou inférieure à 1450°C.

L'invention concerne aussi une pièce frittée présentant la composition chimique suivante, en pourcentages massiques sur la base des oxydes :

- zircone $ZrO_2 \geq 10,0$ % ;
- 2 à 20,0 % d'un oxyde choisi dans le groupe $G_S(1)$ formé par $Y_2O_3$, $Sc_2O_3$, MgO, CaO, $CeO_2$, et leurs mélanges, la teneur MgO + CaO étant inférieure à 5,0 % ;
- 2 % < Albumine $Al_2O_3 \leq 80$ % ;
- 0 à 18,0 % d'un oxyde choisi dans le groupe $G_S(2)$ formé par ZnO, les oxydes de lanthanides excepté $CeO_2$, et leurs mélanges ;
- moins de 12,0 % d'autres oxydes ;
  ladite pièce frittée comportant 0,5 à 10,0 % d'un pigment en un matériau choisi parmi
- les oxyde(s) de structure pérovskite,
- les oxydes de structure spinelle,
- les oxydes de structure hématite $E_2O_3$, l'élément E étant choisi dans le groupe $G_E(1)$ formé par les mélanges d'aluminium et de chrome, les mélanges d'aluminium et de manganèse, et leurs mélanges

- les oxydes de structure rutile $FO_2$, l'élément F étant choisi dans le groupe $G_F(1)$ formé par les mélanges d'étain et de vanadium, les mélanges de titane et de chrome et de niobium, les mélanges de titane et de chrome et de tungstène, les mélanges de titane et de niobium et de manganèse, les mélanges d'étain et de chrome, et leurs mélanges,

- les orthosilicates choisis dans le groupe des orthosilicates de zirconium et de praséodyme $(Zr,Pr)SiO_4$, des orthosilicates de zirconium et de vanadium $(Zr,V)SiO_4$, des orthosilicates de zirconium dans lesquels se trouve de l'oxyde de fer en inclusion.

Dans un mode de réalisation, l'oxyde du groupe $G_S(1)$ est un stabilisant de la zircone.

Dans un autre mode de réalisation, l'oxyde du groupe $G_S(2)$ est un stabilisant de l'alumine.

L'invention concerne en particulier une pièce frittée obtenue ou susceptible d'être obtenue à partir d'un mélange particulaire selon l'invention, en particulier fabriquée conformément à un procédé de fabrication selon l'invention.

Les inventeurs ont découvert qu'une telle pièce frittée présente un aspect particulièrement adapté pour une utilisation dans un article décoratif lorsque la rugosité Ra de sa surface est inférieure à 0,05 $\mu$m, de préférence inférieure à 0,02 $\mu$m, de préférence encore inférieure à 0,01 $\mu$m, ou est comprise entre 0,1 et 0,5 $\mu$m.

De préférence, cette pièce frittée présente une densité supérieure à 98 %, de préférence supérieure à 99 %, de préférence supérieure à 99,5 % de la densité théorique. Les inventeurs ont en effet découvert qu'une densité élevée conduit avantageusement à un bon développement de la couleur dans la pièce frittée, et à de bonnes propriétés mécaniques.

De préférence, la zircone de cette pièce frittée est constituée pour plus de 80 %, de préférence pour plus de 90 %, de préférence pour plus de 95 %, en volume, de phase quadratique et/ou cubique, le complément à 100 % étant constitué de phase monoclinique.

De préférence, la taille médiane des grains de zircone est inférieure à 2 $\mu$m, de préférence inférieure à 1 $\mu$m, voire inférieure à 0,5 $\mu$m.

De préférence, la taille médiane des grains d'alumine est inférieure à 2 $\mu$m, de préférence inférieure à 1 $\mu$m, voire inférieure à 0,5 $\mu$m.

De préférence, la taille médiane des grains de pigment est inférieure à 2 $\mu$m, de préférence inférieure à 1 $\mu$m, voire inférieure à 0,5 $\mu$m.

Le pigment peut être choisi parmi les oxydes de structures pérovskites tels que A et B appartiennent aux groupes $G_A$ (1) à (3) et $G_B$ (1) à (2), les oxydes de structure spinelle tels que C et D appartiennent aux groupes $G_c$ (1) à (2) et $G_D$ (1) à (2), les oxydes de structure hématite tels que E appartient au groupe $G_E$ (1), les oxydes de structure rutile tels que F appartient au groupe $G_F$ (1), un orthosilicate de zirconium et de praséodyme $(Zr,Pr)SiO_4$, un orthosilicate de zirconium et de vanadium $(Zr,V)SiO_4$, un orthosilicate de zirconium dans lequel se trouve de l'oxyde de fer en inclusion, et leurs mélanges, comme décrit ci-dessus.

Une pièce frittée selon l'invention peut en particulier être de couleur noir, voire gris, notamment en choisissant les oxydes de structure pérovskite tels que A et B appartiennent aux groupes $G_A$' (1) à (3) et $G_B$' (1) à (2), et/ou en choisissant les oxydes de structure spinelle tels que C et D appartiennent aux groupes $G_C$' (1) à (2) et $G_D$' (1) à (2), comme décrit ci-dessus.

Elle peut en particulier présenter les paramètres de couleur suivants, mesurés selon la norme NF ISO 7724 :

- $L^* < 50$ pour la couleur gris, et si la couleur noir est recherchée : $L^* < 10$, de préférence $L^* < 5$, de préférence $L^* < 1$ et/ou
- $|a^*| < 5$, de préférence $|a^*| < 2$, de préférence $|a^*| < 1$, de préférence $|a^*| < 0,5$ et/ou
- $|b^*| < 5$, de préférence $|b^*| < 2$, de préférence $|b^*| < 1$, de préférence $|b^*| < 0,5$.

Une pièce frittée selon l'invention peut également être de couleur bleu, notamment en choisissant les oxydes de structure pérovskite tels que A et B appartiennent aux groupes $G_A$" (1) à (3) et $G_B$" (1) à (2), et/ou en choisissant les oxydes de structure spinelle tels que C et D appartiennent aux groupes $G_C$" (1) à (2) et $G_D$" (1) à (2), en particulier en choisissant lesdits oxydes de structure spinelle dans le groupe formé de $Co_2SnO_4$, $CoAl_2O_4$, $Co(Cr,Al)_2O_4$, $(Co,Zn)Al_2O_4$ et leurs mélanges, et/ou en choisissant un orthosilicate de zirconium et de vanadium $(Zr,V)SiO_4$, comme décrit ci-dessus.

Elle peut en particulier présenter les paramètres de couleur suivants, mesurés selon la norme NF ISO 7724 :

- $10 < L^* < 30$, de préférence $10 < L^* < 20$ pour la couleur bleu foncé, et si la couleur bleu clair est recherchée : $30 < L^* < 70$, de préférence $30 < L^* < 50$, et/ou
- $a^* < 5$, de préférence $a^* < 0$, et/ou
- $b^* < -10$, de préférence $b^* < -20$.

Une pièce frittée selon l'invention peut également être de couleur vert, notamment en choisissant les oxydes de structure pérovskite tels que A et B appartiennent aux groupes $G_A$''' (1) à (3) et $G_B$''' (1) à (2), et/ou en choisissant les oxydes de structure spinelle dans le groupe formé par $CoCr_2O_4$, $TiCo_2O_4$, et leurs mélanges, comme décrit ci-dessus.

Elle peut en particulier présenter les paramètres de couleur suivants, mesurés selon la norme NF ISO 7724 :

- $10 < L^* < 30$, de préférence $10 < L^* < 20$ pour la couleur vert foncé, et si la couleur vert clair est recherchée : $30 < L^* < 70$, de préférence $30 < L^* < 50$, et/ou
- $a^* < -5$, de préférence $a^* < -10$, et/ou
- $b^* > 0$, de préférence $b^* > 20$.

Une pièce frittée selon l'invention peut également être de couleur turquoise, notamment en choisissant les oxydes de structure pérovskite tels que A et B appartiennent aux groupes $G_A^{4'}$ (1) à (3) et $G_B^{4'}$(1) à (2), comme décrit ci-dessus.

Elle peut en particulier présenter les paramètres de couleur suivants, mesurés selon la norme NF ISO 7724 :

- $30 < L^* < 70$, de préférence $30 < L^* < 50$ pour la couleur turquoise clair, et/ou
- $a^* < -5$, de préférence $a^* < -10$, et/ou
- $-10 < b^* < 0$, de préférence $-5 < b^* < 0$.

Une pièce frittée selon l'invention peut également être de couleur orange, notamment en choisissant les oxydes de structure pérovskite tels que A et B appartiennent aux groupes $G_A^{5'}$(1) à (2) et $G_B^{5'}$(1), et/ou en choisissant les oxydes de structure rutile tels que F appartient à $G_F'$(1), comme décrit ci-dessus.

Elle peut en particulier présenter les paramètres de couleur suivants, mesurés selon la norme NF ISO 7724 :

- $30 < L^* < 70$, de préférence $30 < L^* < 50$ pour la couleur orange clair, et/ou
- $a^* > 5$, de préférence $a^* > 10$, et/ou
- $b^* > 10$, de préférence $b^* > 20$.

Une pièce frittée selon l'invention peut également être de couleur marron, notamment en choisissant les oxydes de structure pérovskite tels que A et B appartiennent aux groupes $G_A^{6'}$(1) à (3) et $G_B^{6'}$(1), et/ou en choisissant les oxydes de structure spinelle dans le groupe formé par $Fe(Fe,Cr)_2O_4$, $Fe_2TiO_4$, $NiFe_2O_4$, $(Zn,Fe)Fe_2O_4$, $(Fe,Mn)(Fe,Mn,Cr)_2O_4$, $(Zn,Mn)(Mn,Cr)_2O_4$ et leurs mélanges, et/ou en choisissant les oxydes de structure rutile tels que F appartient au groupe $G_F''$(1), comme décrit ci-dessus.

Elle peut en particulier présenter les paramètres de couleur suivants, mesurés selon la norme NF ISO 7724 :

- $10 < L^* < 30$, de préférence $10 < L^* < 20$ pour la couleur marron foncé, et si la couleur marron clair est recherchée : $30 < L^* < 70$, de préférence $30 < L^* < 50$, et/ou
- $a^* > 5$, de préférence $a^* > 10$, et/ou
- $b^* > 10$, de préférence $b^* > 20$.

Une pièce frittée selon l'invention peut également être de couleur rouge, notamment en choisissant les oxydes de structure spinelle tels que C soit le zinc et D soit un mélange d'aluminium et de chrome, et/ou en choisissant les oxydes de structure hématite tels que E appartient au groupe $G_E$(1), et/ou en choisissant les oxydes de structure rutile tel que F appartient au groupe $G_F'''$(1), et/ou en choisissant un orthosilicate de zirconium dans lequel se trouve de l'oxyde de fer en inclusion, comme décrit ci-dessus.

Elle peut en particulier présenter les paramètres de couleur suivants, mesurés selon la norme NF ISO 7724 :

- $30 < L^* < 70$, de préférence $30 < L^* < 50$ pour la couleur rouge clair, et/ou
- $a^* > 5$, de préférence $a^* > 10$, et/ou
- $|b^*| < 10$, de préférence $|b^*| < 5$.

Une pièce frittée selon l'invention peut également être de couleur violet foncé, notamment en choisissant les oxydes de structure pérovskite tels que A et B appartiennent aux groupe $G_A^{7'}$ (1) à (2) et $G_B^{7'}$ (1), comme décrit ci-dessus.

Elle peut en particulier présenter les paramètres de couleur suivants, mesurés selon la norme NF ISO 7724 :

- $10 < L^* < 30$, de préférence $10 < L^* < 20$, et/ou
- $a^* > 5$, de préférence $a^* > 10$, et/ou
- $b^* < -5$, de préférence $b^* < -10$.

Une pièce frittée selon l'invention peut également être de couleur jaune, notamment en choisissant les oxydes de structure rutile tels que F appartient au groupe $G_F^{4'}(1)$, et/ou en choisissant un orthosilicate de zirconium et de praséodyme $(Zr,Pr)SiO_4$, comme décrit ci-dessus.

Elle peut en particulier présenter les paramètres de couleur suivants, mesurés selon la norme NF ISO 7724 :

- $30 < L^* < 70$, de préférence $30 < L^* < 50$ pour la couleur jaune clair, et/ou
- $|a^*| < 5$, et/ou
- $b^* > 10$, de préférence $b^* > 20$.

La composition d'une pièce frittée selon l'invention peut être identique à celle d'un mélange particulaire selon l'invention, en ne considérant pas les constituants temporaires, en particulier, en ne considérant que les oxydes. En particulier, la pièce frittée peut présenter les caractéristiques optionnelles suivantes :

- De préférence, la pièce frittée comporte 0,5 à 10,0 % d'oxyde(s) de structure pérovskite.
- Le taux de pérovskite dans les oxyde(s) de structure pérovskite est supérieur à 90 %, de préférence supérieur à 95 %, de préférence supérieur à 99 %, de préférence sensiblement 100 %.
- La teneur en oxyde(s) de structure pérovskite est supérieure à 3 %, de préférence supérieure à 4 % et/ou inférieure à 9 %, de préférence inférieure à 6 %.
- Le stabilisant de la zircone est choisi dans le groupe formé par $Y_2O_3$, $Sc_2O_3$ et leurs mélanges et la teneur dudit stabilisant de la zircone est inférieure à 8 %, de préférence inférieure à 6,5 %, sur la base de la somme de $ZrO_2$, $Y_2O_3$, $Sc_2O_3$, MgO, CaO et $CeO_2$.
- Le stabilisant de la zircone est choisi dans le groupe formé par MgO, CaO et leurs mélanges et la teneur dudit stabilisant de la zircone est inférieure à 4 %, sur la base de la somme de $ZrO_2$, $Y_2O_3$, $Sc_2O_3$, MgO, CaO et $CeO_2$.
- Le stabilisant de la zircone est $CeO_2$ et la teneur dudit stabilisant de la zircone est supérieure à 10 % et inférieure à 15 %, sur la base de la somme de $ZrO_2$, $Y_2O_3$, $Sc_2O_3$, MgO, CaO et $CeO_2$.
- Le stabilisant de la zircone est choisi dans le groupe formé par $Y_2O_3$, $CeO_2$ et leurs mélanges, et respecte de préférence la relation $10\ \% \leq 3.Y_2O_3 + CeO_2 \leq 20\ \%$, sur la base de la somme de $ZrO_2$, $Y_2O_3$, $Sc_2O_3$, MgO, CaO et $CeO_2$.
- Le stabilisant de la zircone est $Y_2O_3$.
- La teneur en $Y_2O_3$ est supérieure à 3 %, de préférence supérieure à 4 % et/ou inférieure à 8 %, de préférence inférieure à 6,5 %, sur la base de la somme de $ZrO_2$, $Y_2O_3$, $Sc_2O_3$, MgO, CaO et $CeO_2$.
- La teneur en alumine est supérieure à 10% de préférence supérieure à 15% et inférieure à 60 %, de préférence inférieure à 55 %, de préférence inférieure à 50 %, de préférence inférieure à 40 %, de préférence encore inférieure à 30 %. Dans un mode de réalisation particulier, la teneur en alumine est comprise entre 2 % et 10 %. Dans un autre mode de réalisation particulier, la teneur en alumine est comprise entre 10 % et 20 %. Enfin dans un autre mode de réalisation particulier, la teneur en alumine est comprise entre 20 % et 80 %.
- Le stabilisant de l'alumine est choisi dans le groupe formé par ZnO et les oxydes de lanthanides excepté $CeO_2$, et leurs mélanges, et la teneur dudit stabilisant de l'alumine est inférieure à 15%, de préférence inférieure à 10%, de préférence inférieure à 8 %, de préférence inférieure à 5 %, sur la base de la somme de $Al_2O_3$, de ZnO et des oxydes de lanthanides excepté $CeO_2$.
- Le stabilisant de l'alumine est $La_2O_3$, c'est-à-dire que le mélange particulaire ne comporte que $La_2O_3$ comme stabilisant de l'alumine.
- Le stabilisant de l'alumine est $La_2O_3$ et sa teneur est inférieure à 15 %, de préférence inférieure à 10 %, de préférence inférieure à 8 %, de préférence inférieure à 5 %, et/ou de préférence supérieure à 0,5 %, sur la base de la somme de $Al_2O_3$, de ZnO et des oxydes de lanthanides excepté $CeO_2$.
- Les oxydes de structure pérovskite sont de préférence choisis dans les groupes $G_A'$ (1) à (3) et $G_B'$ (1) à (2), $G_A''$ (1) à (3) et $G_B''$ (1) à (2), $G_A'''$ (1) à (3) et $G_B'''$ (1) à (2), $G_A^{4'}$ (1) à (3) et $G_B^{4'}$ (1) à (2), $G_A^{5'}$ (1) à (2) et $G_B^{5'}$ (1), $G_A^{6'}$ (1) à (3) et $G_B^{6'}$ (1), $G_A^{7'}$ (1) à (2) et $G_B^{7'}$ (1) ci-dessus.

L'invention concerne encore un article choisi dans le groupe formé par un bijou, une montre, un bracelet, un collier, une bague, une broche, une épingle de cravate, un sac à main, un téléphone, un meuble et un ustensile ménager, comme par exemple un couteau ou un ciseau, une poignée (dans une voiture comme une poignée de porte, un pommeau de boîte de vitesse ; dans l'habitat comme une poignée de porte et/ou de fenêtre), un bouton (comme un bouton de manchette, un bouton permettant une action (lève vitre, autoradio, ...), un placage (de tableau de bord de voiture, d'un instrument de musique, par exemple d'une guitare, d'un outil, ...), une partie visible d'un équipement de bien de consommation (comme par exemple des touches d'ordinateur ou de téléphone, l'enveloppe extérieur (ou casing) d'un ordinateur,...), une partie de monture de lunettes, voire la monture de lunettes, un article de vaisselle, un cadre (encadrement d'un cadre photo), un capot d'un dispositif de communication par ondes hertziennes de fréquences comprises entre 800MHz à 3GHz, ledit capot étant exposé, au moins en partie, à l'environnement extérieur du dispositif et traversé par au moins une partie desdites ondes lors de l'utilisation du dispositif, ledit article comportant une pièce frittée selon l'invention.

Pour ces articles en particulier, une rugosité Ra de surface inférieure à 0,05 $\mu$m, de préférence inférieure à 0,02 $\mu$m, de préférence encore inférieure à 0,01 $\mu$m, est considérée comme particulièrement avantageuse.

Les propriétés mécaniques rendent une pièce frittée selon l'invention bien adaptée à une application dans laquelle elle est conduite à subir des contraintes abrasives et/ou des chocs et dans laquelle elle doit conserver son apparence en dépit de ces contraintes et/ou de ces chocs. L'invention concerne également une telle application. De préférence, une pièce frittée selon l'invention présente :

- une ténacité supérieure ou égale à 4 MPa·m$^{1/2}$, de préférence supérieure à 7 MPa·m$^{1/2}$, de préférence supérieure à 8 MPa·m$^{1/2}$, voire supérieure à 9 Pa·m$^{1/2}$, et
- une dureté HV10 supérieure à 1300, voire supérieure à 1400, voire supérieure à 1600.

L'invention concerne encore un article comportant une pièce frittée selon l'invention, ladite pièce frittée étant apparente (c'est-à-dire exposée vers l'extérieur), sauf à démonter, au moins partiellement, ledit article.

Dans un mode de réalisation, la pièce frittée ne participe pas substantiellement à la fonction principale de l'article, c'est-à-dire que ladite pièce frittée participe à une fonction principalement décorative, voire purement décorative. Autrement dit, le choix de la pièce frittée résulte principalement d'un choix esthétique.

Dans un mode de réalisation, la pièce frittée exerce une fonction technique. Par exemple, la pièce frittée peut être un support à une autre pièce, et/ou être une pièce de protection, notamment contre les chocs, en particulier pour protéger un émetteur et/ou un récepteur apte à émettre et/ou recevoir des ondes hertziennes de fréquences comprises entre 800 MHz et 3GHz.

L'article décoratif peut présenter un support sur lequel la pièce frittée est collée, clipsée, cousue, ou insérée en force. La pièce frittée peut être également cofrittée avec son support.

Dans un mode de réalisation, l'article décoratif comporte plusieurs pièces frittées selon l'invention. Dans un mode de réalisation, les valeurs de L*, et/ou a* et/ou b* mesurées une première desdites pièces frittées selon l'invention diffèrent de moins de 10 %, de préférence de moins de 5 % des valeurs correspondantes mesurées sur une deuxième desdites pièces frittées selon l'invention. De préférence, cette proximité des valeurs de L*, et/ou a* et/ou b* est respectée quelles que soient les première et deuxième pièces frittées selon l'invention considérées.

De préférence l'indice $\Delta$E mesurant la différence de couleur entre les première et deuxième pièces est tel que $\Delta$E < 5, de préférence $\Delta$E < 2, voire $\Delta$E < 1.

Dans un mode de réalisation, l'article décoratif est emballé, par exemple dans un sachet, une boîte, ou un récipient, par exemple dans un emballage comportant, voire constitué par, du papier et/ou du carton et/ou du plastique ou du métal, de préférence en feuille, de préférence en feuille souple. De préférence, l'emballage porte une information précisant la destination de l'article décoratif et/ou des caractéristiques techniques de l'article décoratif.

L'invention concerne également un procédé de fabrication d'un article décoratif comportant les étapes suivantes :

i) préparation d'un support ;
ii) préparation d'une pièce frittée selon l'invention en fonction d'une couleur recherchée et/ou de l'uniformité de la couleur recherchée, classiquement définie dans un cahier des charges ;
iii) optionnellement, vérification de la couleur de ladite pièce frittée, de préférence par mesure d'au moins un, de préférence de tous, les paramètres suivants : L*, a*, et b* ;
iv) fixation, de manière rigide ou amovible, de la pièce frittée sur le support de manière à constituer un article décoratif ;
v) optionnellement, emballage de l'article décoratif.

Dans un mode de réalisation, la préparation de la pièce frittée selon l'invention (étape ii)) comporte

- la mise en oeuvre d'un procédé de fabrication selon l'invention (comportant des étapes a) à c) ou a') à c')), les matières premières mélangées, et notamment la nature et la composition du pigment, étant déterminées en fonction de la couleur recherchée et/ou de l'uniformité de la couleur recherchée pour la pièce frittée, de préférence par des mesures de L*, a* et b* ; et/ou
- une opération de sélection de la pièce frittée, en fonction d'une couleur recherchée et/ou de l'uniformité de la couleur recherchée, parmi une pluralité de pièces frittées selon l'invention. Pour effectuer cette sélection, il est préférable de vérifier la couleur d'une pluralité de pièces frittées selon l'invention, de préférence par mesure d'au moins un, de préférence de tous, les paramètres suivants : L*, a*, et b*, puis de sélectionner la pièce frittée dont la couleur est la plus proche de la couleur recherchée.

Dans le domaine des couleurs, on appelle classiquement « indice $\Delta E$ », l'écart quadratique moyen entre les paramètres L*, a* et b* mesurés sur un objet ($L_{obj}$, $a_{obj}$ et $b_{obj}$) et les paramètres correspondant de la couleur recherchée (L, a et b), soit :

$$\Delta E = \sqrt{\left(L_{obj} - L\right)}$$

De préférence on sélectionne les pièces frittées de manière que $\Delta E < 5$, de préférence $\Delta E < 2$, voire $\Delta E < 1$.

**<u>Définitions</u>**

- On appelle produit d' « alumine-zircone », un produit contenant de la zircone et plus de 2 % d'alumine. Les produits de zircone renforcée par de l'alumine (ou « alumina-toughned zirconia » ou « ATZ » en anglais) et les produits d'alumine renforcée par de la zircone (ou « zirconia-toughned alumina » ou « ZTA » en anglais) sont des produits d'alumine-zircone, bien connus de l'homme du métier.
- On appelle « frittage » une consolidation par traitement thermique à plus de 1100°C d'un aggloméré particulaire, avec éventuellement une fusion, partiellement ou totale, de certains des constituants de cet aggloméré (mais pas de tous ces constituants).
- Une structure cristallographique pérovskite correspond à un agencement particulier d'éléments dans des sites classiquement appelés « sites A » et « sites B ». On appelle habituellement « éléments A » et « éléments B » les éléments disposés sur les sites A et B, respectivement.
  Parmi les composés présentant une structure cristallographique pérovskite, on distingue en particulier les « oxydes de structure pérovskite ». Ces oxydes comprennent notamment des composés de formule $ABO_3$. Tous les sites A et/ou B ne sont pas toujours occupés par des éléments A et/ou B, respectivement.
  Par exemple, un oxyde de lanthane - manganèse (LM) de structure pérovskite est un composé où A est du lanthane et B du manganèse. Sa structure est classiquement définie par une formule du type $LaMnO_3$. Un autre exemple peut être un oxyde de lanthane - cobalt - fer - manganèse de structure pérovskite où A est du lanthane et B un mélange de cobalt, de fer et de manganèse défini par une formule du type $La\,Co_xFe_yMn_zO_3$, avec $x + y + z = 1$, x, y et z étant les fractions molaires des éléments cobalt, fer et manganèse, respectivement.
- Une structure cristallographique spinelle correspond à un agencement particulier d'éléments C et D dans des sites classiquement appelés « sites octaédriques » et « sites tétraédriques ».
  Les composés présentant une structure cristallographique spinelle comprennent notamment les composés de formule $CD_2O_4$ appelés « spinelles directs », dans lesquels l'élément C occupe un site tétraédrique et l'élément D occupe un site octaédrique, et les composés de formules $D(C,D)O_4$, appelés « spinelles inverses », dans lesquels l'élément D occupe des sites tétraédriques et octaédriques et l'élément C occupe un site octaédrique.
  Par exemple, un oxyde de cobalt - chrome de structure spinelle direct est un composé où C est du cobalt, disposé sur des sites C, et D du chrome, disposé sur des sites D. Sa structure est classiquement définie par une formule du type $CoCr_2O_4$. Un autre exemple de spinelle est le spinelle inverse $TiFe_2O_4$, où C est du titane disposé sur des sites D, et D est du fer disposé sur des sites C et des sites D. Un autre exemple peut être un oxyde de cobalt - fer - chrome de structure spinelle où C est un mélange de cobalt et de fer et D un mélange de fer et de chrome défini par une formule du type $(Co_xFe_y)(Fe_zCr_t)_2O_4$, avec $x + y = 1$ et $z+t = 1$, x, y+z et t étant les fractions molaires des éléments cobalt, fer et chrome, respectivement ; x et y étant les fractions molaires des éléments présents en sites C, et z et t étant les fractions molaires des éléments présents en sites D.
- Une structure cristallographique hématite correspond à un agencement particulier d'éléments dans des sites classiquement appelés « sites E ». On appelle habituellement « éléments E » les éléments disposés sur les sites E.
  Parmi les composés présentant une structure cristallographique hématite, on distingue en particulier les « oxydes de structure hématite ». Ces oxydes comprennent notamment des composés de formule $E_2O_3$.
  Par exemple, un oxyde de manganèse - aluminium de structure hématite est un composé où E est un mélange de manganèse et d'alumine. Sa structure est classiquement définie par une formule du type $(Mn_xAl_y)_2O_3$, avec $x + y = 1$, x et y étant les fractions molaires des éléments manganèse et aluminium, respectivement.
- Une structure cristallographique rutile correspond à un agencement particulier d'éléments dans des sites classiquement appelés « sites F». On appelle habituellement « éléments F » les éléments disposés sur les sites F.
  Parmi les composés présentant une structure cristallographique rutile, on distingue en particulier les « oxydes de structure rutile ». Ces oxydes comprennent notamment des composés de formule $FO_2$.
  Par exemple, un oxyde de manganèse - niobium - titane de structure rutile est un composé où F est un mélange de manganèse de niobium et de titane. Sa structure est classiquement définie par une formule du type $(Mn_xNb_yTi_z)O_2$, avec $x + y + z = 1$, $x$, $y$ et $z$ étant les fractions molaires des éléments manganèse, niobium et titane.

- Un élément A, B, C, D, E, ou F peut comporter plusieurs constituants. Une fraction molaire d'un de ces constituants fait référence à la fraction molaire de ce constituant dans ledit élément.

- Les « oxydes de lanthanides » sont les oxydes des éléments n° 57 (lanthane) à n° 71 (lutécium) du tableau de classification périodique des éléments.

- La notion de « pigment » est bien connue de l'homme du métier. Un pigment est une poudre qui, lorsqu'elle est incorporée dans une préforme, conduit, lors du frittage de ladite préforme, à une coloration particulière. Classiquement, un pigment est une poudre dont la taille médiane de particules est inférieure à 50 $\mu$m.

- Par extension, on appelle également « pigment » les grains correspondant, dans la pièce frittée, au pigment introduit dans la charge de départ.

- On définit le « taux » de pérovskite, spinelle, hématite, rutile ou orthosilicate, hors impuretés, en %, selon la formule (1) suivante :

$$T = 100^* (A_{PIG})/ (A_{PIG} + A_{Phase\ secondaire}) \hspace{2cm} (1)$$

où

  &cir; $A_{PIG}$ est l'aire mesurée sur un diagramme de diffraction X obtenu à partir d'un appareil du type diffractomètre D5000 de la société BRUKER pourvu d'un tube DX en cuivre, sans traitement de déconvolution, du pic principal ou du multiplet principal de diffraction de la structure considérée (pérovskite, spinelle, hématite, rutile ou orthosilicate, respectivement) ;

  &cir; $A_{Phase\ secondaire}$ est l'aire mesurée sur le même diagramme, sans traitement de déconvolution, du pic principal ou multiplet principal de diffraction de la phase secondaire. La phase secondaire est la phase présentant le pic principal ou le multiplet d'aire la plus grande, sans prendre en compte ladite structure considérée.

Un multiplet est la superposition partielle de plusieurs pics. Par exemple, un multiplet composé de deux pics est un doublet, un multiplet composé de trois pics est un triplet.

- Dans une composition chimique, les teneurs en oxydes se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments susmentionnés.

- Par « impuretés », on entend les constituants inévitables, introduits nécessairement avec les matières premières ou résultant de réactions avec ces constituants. Les impuretés ne sont pas des constituants nécessaires, mais seulement tolérés. En particulier, les composés faisant partie du groupe des oxydes, nitrures, oxynitrures, carbures, oxycarbures, carbonitrures et espèces métalliques de sodium et autres alcalins sont des impuretés. A titre d'exemples, on peut citer $Na_2O$. En revanche, l'oxyde d'hafnium n'est pas considéré comme une impureté. On considère qu'une teneur totale en impuretés inférieure à 2 % ne modifie pas substantiellement les résultats obtenus.

- Dans une source de particules de zircone, $HfO_2$ n'est pas chimiquement dissociable de $ZrO_2$. « $ZrO_2$ » désigne donc classiquement la teneur totale de ces deux oxydes. Selon la présente invention, $HfO_2$ n'est pas ajouté volontairement dans la charge de départ. $HfO_2$ ne désigne donc que les traces d'oxyde d'hafnium, cet oxyde étant toujours naturellement présent dans les sources de zircone à des teneurs généralement inférieures à 2 %. Par souci de clarté, on peut donc désigner indifféremment la teneur en zircone et en traces d'oxyde d'hafnium par « $ZrO_2$ », on encore par « teneur en zircone ».

- On appelle « zircone stabilisée », une zircone stabilisée avec un stabilisant et constituée pour plus de 80 %, voire plus de 90 %, voire plus de 95 %, voire sensiblement 100 %, en volume, de phase quadratique et/ou cubique, le complément à 100% étant constitué de phase monoclinique. La quantité de zircone stabilisée est mesurée par diffraction X. Sur une pièce massive, la surface de mesure est polie, la dernière étape de polissage étant réalisée avec une préparation diamantée Mecaprex LD32-E 1$\mu$m commercialisée par la société PRESI, après que la pièce a subi un traitement thermique à 1000°C pendant 1 heure et a été refroidie à température ambiante. Sur une poudre, la mesure est effectuée directement sur la poudre, sans broyage préalable.

- On appelle « précurseur » d'un produit un composé ou un ensemble de composés qui, lors d'un frittage, sous air, conduisent à la formation dudit produit. Dans le cas particulier d'un oxyde de structure pérovskite, un précurseur dudit oxyde de structure pérovskite est un composé constitué d'un mélange intime des oxydes et/ou des précurseurs des oxydes composant ledit oxyde de structure pérovskite. Un tel mélange intime peut par exemple être obtenu par coprécipitation ou atomisation. De préférence, le mélange intime est consolidé par un traitement thermique. Par exemple, si l'on considère un oxyde de lanthane - cobalt - fer - manganèse de structure pérovskite de formule $LaCo_xFe_yMn_zO_3$, avec x + y + z = 1, x, y et z étant les fractions molaires des éléments cobalt, fer et manganèse, respectivement, un précurseur de cet oxyde de structure pérovskite est un mélange intime d'oxyde de lanthane, d'oxyde de cobalt, d'oxyde de fer et d'oxyde de manganèse. Un autre précurseur possible est un mélange intime de précurseurs de ces oxydes, comme par exemple un mélange intime de nitrate de lanthane, de nitrate de cobalt, de nitrate de fer et de nitrate de manganèse. Le mélange doit être intime. Par exemple une poudre qui comporterait des particules de $TiO_2$ et des particules MgO ne serait pas un précurseur de $MgTiO_3$. A cet effet, il faut que $TiO_2$ et MgO soient intimement mélangés au sein d'une même particule. Un mélange intime de sels précipités peut également servir de précurseur.

- Une quantité d'un précurseur d'un produit est dite « équivalente » à une quantité dudit produit lorsque, lors du frittage, elle conduit à ladite quantité dudit produit.
- Par « temporaire », on entend « pouvant être éliminé de la préforme pendant le frittage ».
- On appelle « taille médiane » des grains d'une pièce frittée, la dimension mesurée selon la méthode de « Mean Linear Intercept » décrite dans la méthode ASTM E1382.
- On appelle « taille médiane » d'un ensemble de particules, généralement notée $D_{50}$, la taille divisant les particules de cet ensemble en première et deuxième populations égales en masse, ces première et deuxième populations ne comportant que des particules présentant une taille supérieure, ou inférieure respectivement, à la taille médiane.
- Les percentiles ou « centiles » 10 ($D_{10}$) et 90 ($D_{90}$) sont les tailles de particule correspondant aux pourcentages, en masse, de 10 % et 90 %, respectivement, sur la courbe de distribution granulométrique cumulée des tailles de particules de la poudre, les tailles de particules étant classées par ordre croissant. Par exemple, 10 %, en masse, des particules de la poudre ont une taille inférieure à $D_{10}$ et 90 % des particules en masse ont une taille supérieure à $D_{10}$. Les percentiles peuvent être déterminés à l'aide d'une distribution granulométrique réalisée à l'aide d'un granulomètre laser.
- L'aire spécifique est calculée par la méthode BET (Brunauer Emmet Teller) telle que décrite dans Journal of American Chemical Society 60 (1938), pages 309 à 316.

Sauf mention contraire, tous les pourcentages sont des pourcentages massiques sur la base des oxydes.

Sauf mention contraire, par « comportant un » ou « comprenant un », on entend « comportant au moins un ». Un mélange particulaire selon l'invention peut ainsi comporter, par exemple, un premier pigment en un oxyde de structure pérovskite et un deuxième pigment en un oxyde de structure spinelle.

Dans les groupes $G_A'$ (1) à (3) et $G_B'$ (1) à (2), $G_A''$ (1) à (3) et $G_B''$ (1) à (2), $G_A'''$ (1) à (3) et $G_B'''$ (1) à (2), $G_A^{4'}$ (1) à (3) et $G_B^{4'}$ (1) à (2), $G_A^{5'}$ (1) à (2) et $G_B^{5'}$ (1), $G_A^{6'}$ (1) à (3) et $G_B^{6'}$ (1), $G_A^{7'}$ (1) à (2) et $G_B^{7'}$ (1), les indices x, y, z, et t sont des fractions molaires.

## Description détaillée

Un mélange particulaire selon l'invention est de préférence constitué pour plus de 95 %, plus de 98 %, voire sensiblement 100 % d'oxydes.

De préférence, le mélange particulaire présente une aire spécifique, calculée par la méthode BET, supérieure à 3 m²/g, de préférence supérieure à 5 m²/g et/ou inférieure à 30 m²/g, de préférence inférieure à 25 m²/g, de préférence inférieure à 20 m²/g.

De préférence encore, il présente une taille médiane ($D_{50}$) inférieure à 10 $\mu$m, voire inférieure à 5 $\mu$m, voire inférieure à 3 $\mu$m, voire inférieure à 1 $\mu$m et/ou de préférence supérieure à 0,05 $\mu$m.

Le mélange particulaire peut se présenter sous une forme sèche, c'est-à-dire être obtenu directement par mélange des matières premières adéquates. Il peut aussi avoir subi une étape supplémentaire, par exemple une étape d'atomisation, notamment pour en améliorer l'homogénéité chimique.

De préférence, les constituants principaux (c'est-à-dire dont les teneurs sont les plus élevées) du mélange particulaire sont la zircone et l'alumine.

La taille médiane de la zircone est de préférence inférieure à 10 $\mu$m, voire inférieure à 5 $\mu$m, voire inférieure à 3 $\mu$m, voire inférieure à 1 $\mu$m et/ou de préférence supérieure à 0,05 $\mu$m.

La taille médiane de l'alumine est de préférence inférieure à 10 $\mu$m, voire inférieure à 5 $\mu$m, voire inférieure à 3 $\mu$m, voire inférieure à 1 $\mu$m et/ou de préférence supérieure à 0,05 $\mu$m.

Dans la pièce frittée, la zircone doit être stabilisée. Dans le mélange particulaire, la zircone peut donc être, de préférence, stabilisée, avec ledit stabilisant de la zircone, de préférence avec $Y_2O_3$.

Le stabilisant de la zircone et/ou un précurseur d'un tel stabilisant peuvent aussi, partiellement ou totalement, être incorporés dans le mélange particulaire sous forme d'une poudre, c'est-à-dire sous une forme séparée de la zircone, de manière que, lors du frittage, au moins une partie de la zircone soit stabilisée.

De préférence, le mélange particulaire comporte un stabilisant de la zircone choisi dans le groupe formé par $Y_2O_3$, $CeO_2$ et leurs mélanges. De préférence, la quantité de $Y_2O_3$, $CeO_2$ respecte la relation 10 % ≤ 3.$Y_2O_3$ + $CeO_2$ ≤ 20 %, sur la base de la somme de $ZrO_2$, $Y_2O_3$, $Sc_2O_3$, MgO, CaO et $CeO_2$.

De préférence, ledit stabilisant de la zircone est $Y_2O_3$. La teneur en $Y_2O_3$ peut notamment être supérieure à 3 %, de préférence supérieure à 4 % et/ou inférieure à 8 %, de préférence inférieure à 6,5 %, sur la base de la somme de $ZrO_2$, $Y_2O_3$, $Sc_2O_3$, MgO, CaO et $CeO_2$.

La taille médiane de la poudre de stabilisant de la zircone et/ou d'un précurseur d'un tel stabilisant de la zircone est de préférence inférieure à 1 $\mu$m, de préférence inférieure à 0,5 $\mu$m, de préférence encore inférieure à 0,1 $\mu$m. L'efficacité du stabilisant de la zircone en est avantageusement améliorée lors du frittage.

Dans la pièce frittée, l'alumine peut être stabilisée. Dans le mélange particulaire, l'alumine peut donc être stabilisée, avec ledit stabilisant de l'alumine, de préférence avec $La_2O_3$.

Le stabilisant de l'alumine et/ou un précurseur d'un tel stabilisant peuvent aussi, partiellement ou totalement, être incorporés dans le mélange particulaire sous forme d'une poudre, c'est-à-dire sous une forme séparée de l'alumine, de manière que, lors du frittage, au moins une partie de l'alumine soit stabilisée.

De préférence, le mélange particulaire comporte $La_2O_3$ comme stabilisant de l'alumine en une quantité inférieure à 15%, de préférence inférieure à 10 %, de préférence inférieure à 8 %, de préférence inférieure à 5 %, et/ou de préférence supérieure à 0,5 %, sur la base de la somme de $Al_2O_3$, de ZnO et des oxydes de lanthanides excepté $CeO_2$.

La taille médiane de la poudre de stabilisant de l'alumine et/ou d'un précurseur d'un tel stabilisant de l'alumine est de préférence inférieure à 1 $\mu$m, de préférence inférieure à 0,5 $\mu$m, de préférence encore inférieure à 0,1 $\mu$m. L'efficacité du stabilisant de l'alumine en est avantageusement améliorée lors du frittage.

Selon l'invention, le mélange particulaire comporte encore un ou plusieurs pigments en oxyde(s) de structure pérovskite et/ou en précurseur(s) de tels oxydes et/ou un ou plusieurs pigments en oxyde(s) de structure spinelle et/ou un ou plusieurs pigments en oxyde(s) de structure hématite $E_2O_3$, l'élément E étant choisi dans le groupe $G_E(1)$ formé par les mélanges d'aluminium et de chrome, les mélanges d'aluminium et de manganèse, et leurs mélanges et/ou un ou plusieurs pigments en oxyde(s) de structure rutile $FO_2$, l'élément F étant choisi dans le groupe $G_F(1)$ formé par les mélanges d'étain et de vanadium, les mélanges de titane et de chrome et de niobium, les mélanges de titane et de chrome et de tungstène, les mélanges de titane et de niobium et de manganèse, les mélanges d'étain et de chrome, et leurs mélanges et/ou un ou plusieurs pigments en un orthosilicate choisi dans le groupe des orthosilicates de zirconium et de praséodyme $(Zr,Pr)SiO_4$, des orthosilicates de zirconium et de vanadium $(Zr,V)SiO_4$, et des orthosilicates de zirconium dans lesquels se trouve de l'oxyde de fer en inclusion.

Les particules desdits pigments d'un mélange particulaire selon l'invention peuvent être obtenues par différents procédés, comme la fusion, la synthèse en phase solide, la pyrolyse de sels, la précipitation d'hydroxydes et leur calcination, ou la synthèse par voie sol-gel.

Les inventeurs ont découvert que si le mélange particulaire comporte plus de 10,0 % en masse desdits pigments, les propriétés mécaniques, notamment de ténacité, des pièces frittées sont dégradées. Cette dégradation est rédhibitoire en particulier lorsque les pièces frittées sont destinées à la fabrication d'articles décoratifs tels que des montres, des bracelets, des broches, des épingles de cravate, des colliers, des téléphones, du mobilier ou des ustensiles ménagers comme des couteaux ou des ciseaux. Il est donc important pour ces applications que la teneur totale desdits pigments ne dépasse pas 10,0 %.

Une teneur minimale de 0,5 % desdits pigments dans le mélange particulaire est considérée comme indispensable à l'obtention d'une pièce frittée présentant une bonne résistance aux rayures et aux chocs, ainsi qu'un bel aspect avec des couleurs bien développées et homogènes.

Le pigment utilisé, présente de préférence une taille médiane inférieure à 5 $\mu$m, de préférence inférieure à 1 $\mu$m, de préférence inférieure à 0,5 $\mu$m. Avantageusement, l'efficacité desdits pigments dans la pièce frittée en est améliorée.

Les « autres oxydes » ne sont de préférence que des pigments et des impuretés.

Les impuretés représentent de préférence moins de 1,5 %, de préférence moins de 1 %, de préférence encore moins de 0,5 %, de préférence moins de 0,2 %, de préférence moins de 0,1 %.

Un mélange particulaire selon l'invention peut également comporter un ou plusieurs défloculant(s) et/ou liant(s) et/ou lubrifiants, de préférence temporaires, utilisés classiquement dans les procédés de mise en forme pour la fabrication de préformes à fritter, par exemple une résine acrylique, du polyéthylène glycol (PEG), ou de l'alcool polyvinylique (APV).

Une pièce frittée selon l'invention peut être fabriquée à partir d'un mélange particulaire selon l'invention selon un procédé comportant classiquement les étapes a) à c). Optionnellement, ce procédé comporte, préalablement à l'étape a), une étape de broyage permettant d'atteindre les caractéristiques granulométriques nécessaires à la bonne densification ultérieure du matériau. En particulier, un broyage peut être mis en oeuvre pour que chacune des poudres utilisées à l'étape a) ou pour que le mélange particulaire de l'ensemble de ces poudres présente une taille médiane ($D_{50}$) inférieure à 1 $\mu$m.

A l'étape a), un mélange particulaire selon l'invention "prêt-à-l'emploi" peut être mis en oeuvre. En variante, toutes les matières premières peuvent être dosées au moment de la préparation de la charge de départ.

La charge de départ peut encore comporter un ou plusieurs défloculant(s) et/ou liant(s) et/ou lubrifiants, de préférence temporaires, utilisés classiquement dans les procédés de mise en forme pour la fabrication de préformes à fritter, par exemple une résine acrylique, du polyéthylène glycol (PEG), ou de l'alcool polyvinylique (APV).

Le mélange des matières premières peut éventuellement être atomisé avant de passer à l'étape b). Avantageusement, l'atomisation permet d'améliorer l'homogénéité chimique dudit mélange.

A l'étape b), le mélange est ensuite mis en forme, par exemple par pressage isostatique à froid, afin de former des blocs de taille désirée.

D'autres techniques telles que le coulage en barbotine, le pressage uniaxial, le coulage d'un gel, le vibro-coulage, le moulage par injection ou une combinaison de ces techniques pourraient être utilisées.

A l'étape c), la préforme est frittée, de préférence sous air, à pression atmosphérique ou sous pression (pressage à chaud (« Hot Pressing » en anglais) ou pressage isostatique à chaud (« Hot Isostatic Pressing » en anglais, ou HIP)) et à une température comprise entre 1200°C et 1500°C, de préférence entre 1350°C, voire 1400°C et 1450°C. Avantageusement, un frittage dans ce domaine de température favorise un bon développement de la couleur. Le temps de maintien à cette température est de préférence compris entre 2 et 8 heures. La vitesse de montée est classiquement comprise entre 10 et 100°C/h. La vitesse de descente peut être libre. Si des défloculant(s) et/ou liant(s) et/ou lubrifiants sont utilisés, le cycle de frittage comprend de préférence un palier de 1 à 4 heures à une température comprise entre 400°C et 800°C afin de favoriser l'élimination desdits produits.

Les paramètres du procédé de fabrication, en particulier la granulométrie des particules de la charge de départ, l'additif de frittage, la compression pour fabriquer la préforme et la température de frittage peuvent être adaptés, de manière connue, pour adapter la densité de la pièce frittée à l'application visée.

La pièce frittée obtenue en fin de l'étape c) peut être usinée et/ou subir un traitement de surface, comme par exemple un polissage ou un sablage, selon toute technique connue de l'homme du métier.

## **Exemples**

Les analyses chimiques ont été réalisées par fluorescence X en ce qui concerne les constituants dont la teneur est supérieure à 0,5 %. La teneur des constituants présents en une quantité inférieure à 0,5 % a été déterminée par AES-ICP (« Atomic Emission Spectroscopy-Inductively Coupied Plasma » en anglais).

L'aire spécifique a été mesurée par adsorption d'azote à 77 K et calculée par la méthode BET à 1 point. Les échantillons sont pré-traités à 300°C sous flux d'azote pendant 2 heures avant analyse.

Les phases cristallines dans une poudre ou dans une pièce frittée ont été déterminées par diffraction X sur un appareil Brucker D5000 (avec un réglage pour $2\theta$ de 5° à 80°, avec un pas de 0,02° et 1 seconde par pas).

Préalablement à la mesure, la pièce frittée d'alumine-zircone a été polie, la dernière étape de polissage ayant été réalisée avec une préparation diamantée Mecaprex LD32-E 1 $\mu$m commercialisée par la société PRESI, puis traitée thermiquement à 1000°C pendant 1 heure et refroidie à température ambiante.

Les distributions granulométriques ont été déterminées par sédigraphie, au moyen d'un sédigraphe Sedigraph 5100 de la société Micromeritics®, après avoir dispersé sous ultra-sons une suspension des poudres à caractériser en présence de métaphosphate de sodium.

Une analyse EDS (« Energy Dispersive Spectroscopy» en anglais), une analyse par diffraction X, et/ou une cartographie élémentaire par microsonde peuvent également être réalisées pour identifier la nature des pigments présents dans un mélange particulaire, ainsi que dans la pièce frittée. Alternativement, il est possible de faire subir au mélange particulaire selon l'invention, de préférence après mise en forme dudit mélange particulaire, un traitement thermique de façon à mettre en évidence une coloration après ledit traitement thermique, confirmant la présence d'un pigment.

La taille médiane des grains d'une pièce frittée a été mesurée par une méthode de « Mean Linear Intercept », selon la norme ASTM E1382. Suivant cette norme, on trace des lignes d'analyse sur des images de ladite pièce frittée, puis, le long de chaque ligne d'analyse, on mesure les longueurs, dites « intercepts », entre deux joints de grains consécutifs coupant ladite ligne d'analyse. On détermine ensuite la longueur moyenne « l' » des intercepts « I ». Pour les tests ci-dessous, les intercepts ont été mesurés sur des images, obtenues par microscopie électronique à balayage, de sections de la pièce frittée, lesdites sections ayant préalablement été polies jusqu'à obtention d'une qualité miroir puis attaquées thermiquement à une température inférieure de 100°C à la température de frittage, pour révéler les joints de grains. Le grossissement utilisé pour la prise des images a été choisi de façon à visualiser environ 500 grains sur une image. 5 images par pièce frittée ont été réalisées.

La taille moyenne « d » des grains de la pièce frittée est donnée par la refation : d =1,50.l'. Cette formule est issue de « Average Grain Size in Polycrystalline Ceramics » M. I. Mendelson, J. Am. Cerm. Soc. Vol. 52, No.8, pp443-446.

Les mesures de couleur ont été réalisées selon la norme NF ISO 7724 sur des pièces polies dont la dernière étape de polissage a été réalisée avec une préparation diamantée Mecaprex LD32-E 1 $\mu$m commercialisée par la société PRESI, à l'aide d'un appareil CM-2500d, fabriqué par la société Konica Minolta, avec illuminant D65 (lumière naturelle), observateur à 10°, et réflexion spéculaire exclue.

La dureté et la ténacité des pièces frittées testées ont été mesurées par indentation Vickers sur des pièces frittées polies, la dernière étape de polissage ayant été réalisée avec une pâte diamantée de 1 $\mu$m.

La résistance en flexion a été mesurée à température ambiante par flexion 3 points sur des barrettes usinées de dimensions 45 mm x 4 mm x 3 mm.

Les exemples non limitatifs suivants sont donnés dans le but d'illustrer l'invention.

Les poudres des différents oxydes de structure pérovskite utilisés dans les exemples 1 à 12, et 21, sont préparées par réaction en phase solide de différents nitrates co-précipités en milieu basique par de l'ammoniaque. Les sels employés, fournis par Sigma Aldrich, sont du nitrate de lanthane hydraté La$(NO_3)_3$, x$H_2O$, du nitrate de manganèse hydraté Mn$(NO_3)_2$, X$H_2O$, du nitrate de cobalt hexahydraté, Co$(NO_3)_2$, 6$H_2O$, du nitrate de fer nonahydraté Fe$(NO_3)_3$,9$H_2O$, du nitrate de chrome nonahydraté Cr$(NO_3)_3$,9$H_2O$. Les hydrates sont mis en solution dans de l'eau distillée à concentration totale de 1 mol/l. Les masses des différents nitrates introduits figurent dans le tableau 1 suivant :

Tableau 1

| | La(Co$_{0,3}$Fe$_{0,4}$Cr$_{0,3}$)O$_3$ | LaCoO$_3$ | LaFeO$_3$ | La(Co$_{0,2}$Fe$_{0,2}$Mn$_{0,6}$)O$_3$ | La(Cr$_{0,9}$Co$_{0,11}$)O$_3$ |
|---|---|---|---|---|---|
| Eau distslée | Complément à 500 ml | Complément à 500 ml | Complément à 500 ml | Complément à 500 ml | Complément à 500 ml |
| La(NO$_3$)$_3$, xH$_2$O | 80 g | 80 g | 80 g | 80 g | 80 g |
| Mn(NO$_3$)$_2$, xH$_2$O | - | - | - | 50 g | - |
| Cr(NO$_3$)$_3$;9H$_2$O | 19,2 g | - | - | - | 7 g |
| Co(NO$_3$)$_2$, 6H$_2$O | 21 g | 70 g | - | 14,5 g | 58 g |
| Fe(NO$_3$)$_3$;9H$_2$O | 38,8 g | - | 97 g | 20 g | 80 g |

L'ammoniaque est ajoutée progressivement sous agitation jusqu'à un pH de 9. Le précipité obtenu est ensuite filtré sur Buchner et séché à l'étuve à 110°C pendant 1 nuit. Les précipités sont ensuite séchés pendant au moins 12 h à l'étuve à 110°C. Les poudres ainsi obtenues sont traitées thermiquement sous air à une température permettant la formation de la phase pérovskite, en général comprise entre 1000°C et 1400°C. (Une température inférieure aurait été possible, mais aurait conduit à un précurseur de pérovskite). Dans le cas présent, la température était de 1300°C. Après traitement thermique, le taux de pérovskite mesuré par diffraction X sur chacune des poudres était supérieur ou égal à 90 %.

La détermination de la teneur en phase de structure pérovskite a été déterminée par la méthode décrite auparavant dans la présente description. A titre d'exemple, la détermination du taux de pérovskite d'oxyde de lanthane - chrome - cobalt $La(Cr_{0,9}Co_{0,1})O_3$ a été effectuée à partir des diagrammes de diffraction X, acquis avec un diffractomètre D5000 de la société BRUKER pourvu d'un tube DX en cuivre. Après synthèse, les produits obtenus peuvent comporter la phase pérovskite ainsi que d'autres phases, en quantités moins importantes, comme $Cr_2O_3$,

Les phases pérovskites des oxydes de lanthane - chrome - cobalt sont identifiées, suivant le protocole classique, par diffraction X, au moyen de fiches ICDD {« International Center for Diffraction Data »}. Par exemple, la fiche ICDD 00-024-1016 est celle de la phase pérovskite de l'oxyde de lanthane - chrome - cobalt $La(Cr_{0,9}Co_{0,1})O_3$.

Dans la pratique, les mesures du taux de pérovskite des oxydes de lanthane - chrome - cobalt sont effectuées lorsque le diagramme de diffraction X montre :

- une phase pérovskite d'oxyde de lanthane - chrome - cobalt majoritaire,

- une phase secondaire et éventuellement d'autres phases minoritaires.

Alors, à l'aide du logiciel EVA (commercialisé par la société BRUKER) et après avoir effectué une soustraction du fond continu (background 0,8), il est possible de mesurer l'aire $A_{PER}$ (sans traitement de déconvolution) du pic principal ou multiplet principal de diffraction de la phase pérovskites de l'oxyde de lanthane - chrome - cobalt et l'aire $A_{phase\ secondaire}$ (sans traitement de déconvolution) du pic principal ou multiplet principal de diffraction de la phase secondaire ($Cr_2O_3$ dans le cas présent). Le taux de pérovskite d'oxyde de lanthane - chrome - cobalt est alors calculé suivant la formule (1).

Ainsi, si la phase de pérovskite de l'oxyde de lanthane - chrome - cobalt est la seule phase en présence dans le diagramme de diffraction X, le taux de pérovskite est égal à 100 %. Dans le cas présent, la taux de pérovskite $La(Cr_{0,9}Co_{0,1})O_3$ calculé suivant la formule (1) est de 95 %.

La poudre de spinelle $(Co,Fe)(Fe,Cr)_2O_4$ utilisée dans les exemples 13 à 20 est préparée par réaction en phase solide de différents nitrates co-précipités en milieu basique par de l'ammoniaque. Les hydrates employés, fournis par Sigma Aldrich, sont du nitrate de cobalt hexahydraté, $Co(NO_3)_2, 6H_2O$, du nitrate de fer nonahydraté $Fe(NO_3)_3,9H_2O$ et du nitrate de chrome nonahydraté $Cr(NO_3)_3,9H_2O$. Les hydrates sont mis en solution dans de l'eau distillée à concentration totale de 1 mol/l. Les masses des différents hydrates introduits figurent dans le tableau 2 suivant :

<u>Tableau 2</u>

|  | $(Co,Fe)(Fe,Cr)_2O_4$ |
|---|---|
| Eau distillée | Complément à 500 ml |
| $Cr(NO_3)_3,9H_2O$ | 32 g |
| $Co(NO_3)_2, 6H_2O$ | 35 g |
| $Fe(NO_3)_3,9H_2O$ | 48,5 g |

L'ammoniaque est ajoutée progressivement sous agitation jusqu'à un pH de 9. Le précipité obtenu est ensuite filtré sur Buchner et séché à l'étuve à 110°C pendant 1 nuit. Le précipité est ensuite séché pendant au moins 12 h à l'étuve à 110°C. La poudre ainsi obtenue est traitée thermiquement sous air à une température de 1200°C permettant la formation de la phase spinelle. Après traitement thermique, le taux de spinelle mesuré par diffraction X sur cette poudre était supérieur à 95 %, la détermination de la teneur en phase de structure spinelle ayant été déterminée par la méthode décrite auparavant dans la présente description, et calculé suivant la formule (1).

La poudre de $Fe_2O_3$, oxyde de structure hématite, utilisée dans l'exemple 22 est une poudre d'oxyde de fer $Fe_2O_3$, commercialisée par la société BASF.

La poudre de $Mn_2O_3$, oxyde de structure hématite, utilisée dans l'exemple 23 est une poudre d'oxyde de manganèse $Mn_2O_3$, obtenue après traitement thermique à 800°C pendant 2h sous air de $MnO_2$, grade électrolytique, commercialisée par la société delta EMD.

La poudre d'orthosilicate de zirconium et de praséodyme $(Zr,Pr)SiO_4$ utilisée dans l'exemple 24, est une poudre d'orthosilicate de zirconium et de praséodyme, grade SICOCER F YELLOW 2255, commercialisée par la société BASF.

La poudre d'orthosilicate de zirconium dans lesquels se trouve de l'oxyde de fer en inclusion utilisée dans l'exemple 25 est une poudre d'orthosilicate de zirconium et de d'oxyde de fer, grade SICOCER F RED 2355, commercialisée par la société BASF.

Pour chacun des exemples réalisés, la poudre de pigment de structure pérovskite ou de pigment de structure spinelle ou de pigment de structure hématite ou de pigment orthosilicate est mélangée à une poudre de zircone yttriée et à une poudre d'alumine dont les principales caractéristiques figurent dans le tableau 3, par microbroyage de la poudre de zircone yttriée avec la poudre d'alumine et avec la poudre de pigment de structure pérovskite ou de pigment de structure spinelle ou de pigment de structure hématite ou de pigment orthosilicate.

Tableau 3

|  | Poudre de zircone yttriée n°1 | Poudre de zircone yttriée n°2 | Poudre d'alumine |
|---|---|---|---|
| $ZrO_2$ (% massique) | Complément à 100 % | Complément à 100 % | - |
| $Y_2O_3$ (% massique) | 5,30 | 5,30 | - |
| $Al_2O_3$ (% massique) | 0,01 | 0,005 | Complément à 100 % |
| $SiO_2$ (ppm) | 100 | 100 | 50 |
| $Na_2O$ (ppm) | 140 | 40 | 100 |
| CaO (ppm) | 30 | 20 | 20 |
| $Fe_2O_3$ (ppm) | 20 | 25 | 20 |
| MgO (ppm) | <20 | <20 | 20 |
| $TiO_2$ (ppm) | <20 | <20 | <20 |
| Aire spécifique ($m^2$/g) | 13 | 7 | 7 |
| $d_{10}$ ($\mu$m) | 0,1 | 0,2 | 0,1 |
| $d_{50}$ ($\mu$m) | 0,25 | 0,35 | 0,4 |
| $d_{90}$ ($\mu$m) | 1,1 | 1,2 | 1,0 |

Ce microbroyage est effectué dans un broyeur humide à billes (billes de zircone à 3 mol % d'$Y_2O_3$, de diamètre 0,8 mm) ou "attriteur". Les conditions de broyage employées pour chaque mélange sont les suivantes :

- Volume du broyeur : 800 ml ;
- Masse de billes : 2,2 kg ;
- Volume d'eau déminéralisée : 200 ml ;
- Masse de poudre à microbroyer : 50 g.

Après microbroyage, les poudres présentent une taille médiane, mesurée par sédigraphie, de 0,25 $\mu$m.

Les différentes suspensions sont ensuite séchées par atomisation, avec une température en entrée de l'atomiseur de 300°C et une température en sortie de l'atomiseur de 110°C, le débit de la suspension étant de 6 l/h. Les poudres ainsi obtenues sont ensuite tamisées au tamis de 250 $\mu$m.

Les différents mélanges particulaires réalisés figurent dans le tableau 4 suivant :

Tableau 4

| Ex. | Poudre de zircone yttriée n°1 selon le tableau 3 (%) | Poudre de zircone yttriée n°2 selon le tableau 3 (%) | Poudre d'alumine selon le tableau 3 (%) | Poudre de pigment de structure pérovskite (%) | Nature de l'oxyde de structure pérovskite | Poudre de pigment de structure spinelle, (%) | Nature de l'oxyde de structure spinelle | Poudre de pigment de structure de hématite (%) | Nature de l'oxyde de structure hématite | Poudre de pigment orthosilicate (%) | Nature de l'oxyde orthosilicates |
|---|---|---|---|---|---|---|---|---|---|---|---|
| 1 | 90 | - | 5 | 5 | $La(Co_{0,3}Fe_{0,4}Cr_{0,3})O_3$ | - | - | - | - | - | - |
| 2 | 75 | - | 20 | 5 | $La(CO_{0,3}Fe_{0,4}Cr_{0,3})O_3$ | - | - | - | - | - | - |
| 3 | 90 | - | 5 | 5 | $LaCoO_3$ | - | - | - | - | - | - |
| 4 | 75 | - | 20 | 5 | $LaCoO_3$ | - | - | - | - | - | - |
| 5 | 90 | - | 5 | 5 | $LaFeO_3$ | - | - | - | - | - | - |
| 6 | 75 | - | 20 | 5 | $LaFeO_3$ | - | - | - | - | - | - |
| 7 | 90 | - | 5 | 5 | $La(Co_{0,2}Fe_{0,2}Mn_{0,6})O_3$ | - | - | - | - | - | - |
| 8 | 75 | - | 20 | 5 | $La(Co_{0,2}Fe_{0,2}Mn_{0,6})O_3$ | - | - | - | - | - | - |
| 9 | 90 | - | 5 | 5 | $La(Cr_{0,9}Co_{0,1})O_3$ | - | - | - | - | - | - |
| 10 | 75 | - | 20 | 5 | $La(Cr_{0,9}Co_{0,1})O_3$ | - | - | - | - | - | - |
| 11 | - | 90 | 5 | 5 | $La(Co_{0,3}Fe_{0,4}Cr_{0,3})O_3$ | - | - | - | - | - | - |
| 12 | - | 75 | 20 | 5 | $La(Co_{0,3}Fe_{0,4}Cr_{0,3})O_3$ | - | - | - | - | - | - |
| 13 | 92 | - | 3 | - | - | 5 | $(Co,Fe)(Fe,Cr)_2O_4$ | - | - | - | - |
| 14 | 90 | - | 5 | - | - | 5 | $(Co,Fe)(Fe,Cr)_2O_4$ | - | - | - | - |
| 15 | 84 | - | 10 | - | - | 6 | $(Co,Fe)(Fe,Cr)_2O_4$ | - | - | - | - |
| 16 | 74 | - | 20 | - | - | 6 | $(Co,Fe)(Fe,Cr)_2O_4$ | - | - | - | - |
| 17 | 64 | - | 30 | - | - | 6 | $(Co,Fe)(Fe,Cr)_2O_4$ | - | - | - | - |
| 18 | 44 | - | 50 | - | - | 6 | $(Co,Fe)(Fe,Cr)_2O_4$ | - | - | - | - |
| 19 | - | 90 | 5 | - | - | 5 | $(Co,Fe)(Fe,Cr)_2O_4$ | - | - | - | - |
| 20 | - | 75 | 20 | - | - | 5 | $(Co,Fe)(Fe,Cr)_2O_4$ | - | - | - | - |
| 21 | 65 | - | 20 | 15 | $La(Co_{0,3}Fe_{0,4}Cr_{0,3})O_3$ | - | - | - | - | - | - |
| 22 | 79 | - | 20 | - | - | - | - | 1 | $Fe_2O_3$ | - | - |

| Ex. | Poudre de zircone yttriée n°1 selon le tableau 3 (%) | Poudre de zircone yttriée n°2 selon le tableau 3 (%) | Poudre d'alumine selon le tableau 3 (%) | Poudre de pigment de structure pérovskite (%) | Nature de l'oxyde de structure pérovskite | Poudre de pigment de structure spinelle, (%) | Nature de l'oxyde de structure spinelle | Poudre de pigment de structure de hématite (%) | Nature de l'oxyde de structure hématite | Poudre de pigment orthosilicate (%) | Nature de l'oxyde orthosilicates |
|---|---|---|---|---|---|---|---|---|---|---|---|
| 23 | 78 | - | 20 | - | - | - | - | 2 | $Mn_2O_3$ | - | - |
| 24 | 75 | - | 20 | - | - | - | - | - | - | 5 | $(Zr,Pr)SiO_4$ |
| 25 | 75 | - | 20 | - | - | - | - | - | - | 5 | $Fe:ZrSiO_4$ |

Des préformes, sous la forme de pastilles de diamètre 32 mm et de masse 8 grammes, ont été réalisées par pressage uniaxial à une pression de 100 MPa des mélanges particulaires des exemples. Lesdites préformes ont ensuite été frittées suivant le cycle suivant :

- montée en température à 500°C à 100°C/h,
- maintien à 500°C pendant 2 heures,
- montée en température jusqu'à une température T, à 100°C/h,
- maintien à la température T pendant 2 heures,
- descente en température par refroidissement naturel.

Le tableau 5 suivant résume les propriétés des pièces frittées obtenues.

Tableau 5

| Mélange particulaire selon l'exemple | Température T (°C) | Densité (g/cm$^3$) | Ténacité (MPa·m$^{1/2}$) | Dureté (HV10) | L* | a* | b* | Couleur |
|---|---|---|---|---|---|---|---|---|
| 1 | 1450 | 5,82 | 11 | 1400 | 0,2 | 0,1 | 0,1 | Noir |
| 2 | 1450 | 5,38 | 10 | 1800 | 0,4 | 0,2 | 0,2 | Noir |
| 3 | 1450 | 5,84 | - | - | 34 | 9 | -50 | Bleu |
| 4 | 1450 | 5,40 | - | - | 45 | 7 | -40 | Bleu |
| 5 | 1450 | 5,80 | - | - | 50 | 10 | 2 | Rouge |
| 6 | 1450 | 5,30 | - | - | 65 | 10 | 20 | Orange |
| 7 | 1450 | 5,84 | 10 | 1400 | 0,4 | 0,2 | 0,5 | Noir |
| 8 | 1450 | 5,35 | - | - | 1 | 0,5 | 1 | Noir |
| 9 | 1450 | 5,84 | 10 | 1400 | 20 | -10 | 20 | Vert |
| 10 | 1450 | 5,35 | 9 | 1800 | 40 | -10 | 20 | Vert |
| 11 | 1500 | 5,85 | - | - | 0,5 | 0,2 | 0,5 | Noir |
| 12 | 1500 | 5,38 | - | - | 0,8 | 0,2 | 0,5 | Noir |
| 13 | 1450 | 5,91 | 13 | 1400 | 0,2 | -0,1 | 0,1 | Noir |
| 14 | 1450 | 5,85 | 12 | 1450 | 0,2 | -0,1 | 0 | Noir |
| 15 | 1450 | 5,74 | - | | 0,3 | -0,2 | -0,1 | Noir |
| 16 | 1450 | 5,40 | 10 | 1850 | 0,4 | -0,2 | -0,2 | Noir |
| 17 | 1450 | 5,15 | 7 | 1900 | 1 | -0,2 | -0,5 | Noir |
| 18 | 1450 | 4,64 | 4 | 1950 | 4 | -0,5 | -1,2 | Gris |
| 19 | 1500 | 5,86 | 10 | 1400 | 0,5 | -0,5 | -0,2 | Noir |
| 20 | 1500 | 5,40 | - | - | 1 | -1 | -1 | Noir |
| 21 | 1450 | 5,35 | 3 | 1550 | 0,4 | 0,1 | 0,1 | Noir |
| 22 | 1450 | 5,39 | 9 | 1800 | 45 | 20 | 35 | Orange |
| 23 | 1450 | 5,34 | 8 | 1900 | 70 | 10 | 3 | Violet |
| 24 | 1450 | 5,33 | 7 | 1500 | 80 | -1 | 30 | Jaune |
| 25 | 1450 | 5,32 | 7 | 1500 | 45 | 5 | 20 | Orange |

La zircone des pièces frittées obtenues à partir des mélanges particulaires 1 à 25 est constituée pour plus de 95 %, en volume, de phase quadratique et/ou cubique, le complément à 100 % étant constitué de phase monoclînique. L'alumine des pièces frittées obtenues à partir des mélanges particulaires 1 à 25 est constituée pour sensiblement 100 % de phase alpha.

Le tableau 5 montre que les pièces frittées selon l'invention testées présentent de bonnes propriétés mécaniques et sont denses.

Une comparaison des exemples 1 et 2, 9 et 10, 13 et 14, 16 à 18 montre une diminution de la ténacité et une augmentation de la dureté lorsque la teneur en alumine augmente, à teneur en pigment de structure pérovskite ou à teneur en pigment de structure spinelle constante.

L'exemple 21, hors invention montre qu'une teneur en pigment de structure pérovskite égale à 15% dégrade la ténacité à un niveau rédhibitoire pour une application où la résistance aux chocs est nécessaire.

Les pièces frittées selon l'invention sont particulièrement bien adaptées à une utilisation comme parure décorative dans des articles tels que des montres, des bracelets, des broches, des épingles de cravate, des colliers, des téléphones, du mobilier ou des ustensiles ménagers comme des couteaux ou des ciseaux, ainsi que comme capot dans un dispositif de communication par ondes hertziennes de fréquences comprises entre 800MHz à 3GHz, ledit capot étant exposé, au moins en partie, à l'environnement extérieur du dispositif et traversé par au moins une partie desdites ondes lors de l'utilisation du dispositif.

Bien entendu, la présente invention n'est pas limitée aux modes de réalisation décrits et fournis à titre d'exemples.

## Revendications

1. Article choisi dans le groupe formé par un bijou, une montre, un bracelet, un collier, une bague, une broche, une épingle de cravate, un sac à main, un téléphone, un meuble et un ustensile ménager, une poignée, un bouton, un placage, une partie visible d'un équipement de bien de consommation, une partie de monture de lunettes, un article de vaisselle, un cadre, un capot d'un dispositif de communication par ondes hertziennes de fréquences comprises entre 800MHz à 3GHz, ledit capot étant exposé, au moins en partie, à l'environnement extérieur du dispositif et traversé par au moins une partie desdites ondes lors de l'utilisation du dispositif, ledit article comportant une pièce frittée présentant la composition chimique suivante, en pourcentages massiques sur la base des oxydes :

   - zircone $ZrO_2 \geq 10,0$ % ;
   - 2 à 20,0 % d'un oxyde choisi dans le groupe $G_S(1)$ formé par $Y_2O_3$, $Sc_2O_3$, MgO, CaO, $CeO_2$, et leurs mélanges, la teneur MgO + CaO étant inférieure à 5,0 % ;
   - 2 % < alumine $Al_2O_3 \leq 80$ % ;
   - 0 à 18,0 % d'un oxyde choisi dans le groupe $G_S(2)$ formé par ZnO, les oxydes de lanthanides excepté $CeO_2$, et leurs mélanges ;
   - moins de 12,0 % d'autres oxydes ;
   ladite pièce frittée comportant 0,5 à 10,0 % d'un pigment en un matériau choisi parmi
   - les oxyde(s) de structure pérovskite $ABO_3$,
   - les oxydes de structure spinelle, $CD_2O_4$, la teneur massique en alumine dans la pièce frittée étant supérieure à 10% ou l'élément C de la structure spinelle est choisi dans le groupe $G_C(1)$ formé par le nickel Ni dans une fraction molaire comprise entre 0 et 0,2 ou dans une fraction molaire égale à 1, le cuivre Cu dans une fraction molaire comprise entre 0 et 0,2, le fer Fe dans une fraction molaire comprise entre 0,2 et 0,6 ou dans une fraction molaire égale à 1, le zinc Zn dans une fraction molaire comprise entre 0 et 0,2 ou dans une fraction molaire égale à 1, le manganèse Mn dans une fraction molaire comprise entre 0 et 0,4, l'étain Sn dans une fraction molaire comprise entre 0 et 0,2 ou dans une fraction molaire égale à 1, les mélanges de zinc et de fer, les mélanges de fer et de manganèse, les mélanges de zinc et de manganèse, et leurs mélanges,
   - les oxydes de structure hématite $E_2O_3$, l'élément E étant choisi dans le groupe $G_E(1)$ formé par les mélanges d'aluminium et de chrome, les mélanges d'aluminium et de manganèse, et leurs mélanges
   - les oxydes de structure rutile $FO_2$, l'élément F étant choisi dans le groupe $G_F(1)$ formé par les mélanges d'étain et de vanadium, les mélanges de titane et de chrome et de niobium, les mélanges de titane et de chrome et de tungstène, les mélanges de titane et de niobium et de manganèse, les mélanges d'étain et de chrome, et leurs mélanges,
   - les orthosilicates choisis dans le groupe formé par les orthosilicates de zirconium et de praséodyme $(Zr,Pr)SiO_4$, les orthosilicates de zirconium et de vanadium $(Zr,V)SiO_4$, et les orthosilicates de zirconium dans lesquels se trouve de l'oxyde de fer en inclusion et leurs mélanges.

2. Article selon la revendication précédente, dans lequel

   - l'oxyde de structure pérovskite $ABO_3$ est tel que

      ○ l'élément A au site A de la structure pérovskite dudit oxyde est choisi dans le groupe $G_A(1)$ formé par le calcium, le strontium, le baryum, le lanthane, le praséodyme, le néodyme, le bismuth, le cérium, et leurs mélanges ; et

○ l'élément B au site B de la structure pérovskite dudit oxyde est choisi dans le groupe $G_B(1)$ formé par les mélanges de cobalt et de fer, les mélanges de cobalt et de manganèse, les mélanges de cobalt et de chrome, les mélanges de cobalt et de nickel, les mélanges de chrome et de manganèse, les mélanges de chrome et de nickel, les mélanges de chrome et de fer, les mélanges de manganèse et de fer, les mélanges de manganèse et de nickel, les mélanges de nickel et de fer, les mélanges de cobalt et de titane, les mélanges de cobalt et de cuivre, le cobalt, les mélanges de chrome et de titane, les mélanges de chrome et de cuivre, les mélanges de nickel et de titane, le chrome, le nickel, le cuivre, le fer, les mélanges de nickel et de cuivre, et leurs mélanges ; et/ou

- l'oxyde de structure spinelle $CD_2O_4$ ou $D(C,D)O_4$ est tel que

○ l'élément C de la structure spinelle est choisi dans le groupe $G_C(1)$ formé par le nickel Ni dans une fraction molaire comprise entre 0 et 0,2 ou dans une fraction molaire égale à 1, le cuivre Cu dans une fraction molaire comprise entre 0 et 0,2, le fer Fe dans une fraction molaire comprise entre 0,2 et 0,6 ou dans une fraction molaire égale à 1, le zinc Zn dans une fraction molaire comprise entre 0 et 0,2 ou dans une fraction molaire égale à 1, le manganèse Mn dans une fraction molaire comprise entre 0 et 0,4, le cobalt Co dans une fraction molaire comprise entre 0 et 0,4 ou dans une fraction molaire comprise entre 0,4 et 1, l'étain Sn dans une fraction molaire comprise entre 0 et 0,2 ou dans une fraction molaire égale à 1, les mélanges de zinc et de fer, les mélanges de fer et de manganèse, les mélanges de zinc et de manganèse, les mélanges de cobalt et de zinc, et leurs mélanges ; la teneur massique en alumine étant supérieure à 10% et

○ l'élément D de la structure spinelle est choisi dans le groupe $G_D(1)$ formé par le manganèse Mn dans une fraction molaire comprise entre 0 et 0,4, le fer Fe dans une fraction molaire comprise entre 0 et 0,6 ou dans une fraction molaire égale à 1, le chrome Cr dans une fraction molaire comprise entre 0,2 et 0,6 ou dans une fraction molaire égale à 1, l'aluminium Al dans une fraction molaire comprise entre 0 et 1, le titane Ti dans une fraction molaire comprise entre 0 et 1, le cobalt dans une fraction molaire égale à 1 sauf si l'élément C est le cobalt, les mélanges de fer et de chrome, les mélanges de fer et de chrome et de manganèse, les mélanges de manganèse et de chrome, les mélanges d'aluminium et de chrome, et leurs mélanges.

3.  Article selon l'une quelconque des revendications précédentes, dans lequel l'élément A au site A de la structure pérovskite est le lanthane.

4.  Article selon l'une quelconque des revendications 1 et 2, dans lequel l'oxyde de structure spinelle $CD_2O_4$ ou $D(C,D)O_4$ est tel que Ni est présent dans une fraction molaire comprise entre 0 et 0,2.

5.  Article selon la revendication 1, dans lequel le pigment est choisi parmi

- les oxydes de structure pérovskite $ABO_3$ tels que

○ l'élément A au site A de la structure pérovskite est choisi dans le groupe $G_A'(1)$ formé par le calcium Ca, le strontium Sr, le baryum Ba, le lanthane La, le praséodyme Pr, le néodyme Nd, le bismuth Bi, le cérium Ce, et leurs mélanges, et

○ l'élément B au site B de la structure pérovskite est choisi dans le groupe $G_B'(1)$ formé par les mélanges de cobalt et de fer $Co_x Fe_{1-x}$, avec x compris entre 0,2 et 0,4, les mélanges de cobalt et de manganèse $Co_x Mn_{1-x}$, avec x compris entre 0,2 et 0,4, les mélanges de chrome et de manganèse $Cr_x Mn_{1-x}$, avec x compris entre 0,2 et 0,4, les mélanges de chrome et de fer $Cr_x Fe_{1-x}$, avec x compris entre 0,3 et 0,5, les mélanges de manganèse et de fer $Mn_x Fe_{1-x}$, avec x compris entre 0,4 et 0,7, les mélanges de nickel et de fer $Ni_x Fe_{1-x}$, avec x compris entre 0,4 et 0,7, et leurs mélanges, et/ou

- les oxydes de structure spinelle $CD_2O_4$ ou $D(C,D)O_4$ tels que

○ l'élément C est choisi dans le groupe $G_C'(1)$ formé par le nickel Ni dans une fraction molaire comprise entre 0 et 0,2, le cuivre Cu dans une fraction molaire comprise entre 0 et 0,2, le fer Fe dans une fraction molaire comprise entre 0,2 et 0,6, le zinc Zn dans une fraction molaire comprise entre 0 et 0,2, le manganèse Mn dans une fraction molaire comprise entre 0 et 0,4, le cobalt Co dans une fraction molaire comprise entre 0 et 0,4, et leurs mélanges, et

○ l'élément D est choisi dans le groupe $G_D'(1)$ formé par le manganèse Mn dans une fraction molaire comprise entre 0 et 0,4, le fer Fe dans une fraction molaire comprise entre 0,2 et 0,6, le chrome Cr dans une fraction molaire comprise entre 0,2 et 0,6, l'aluminium Al dans une fraction molaire comprise entre 0 et 0,4, le titane Ti dans une fraction molaire comprise entre 0 et 0,4, et leurs mélanges,

ou

dans lequel le matériau des particules dudit pigment est choisi parmi
- les oxydes de structure pérovskite $ABO_3$ tels que

• l'élément A au site A de la structure pérovskite est choisi dans le groupe $G_A''(1)$ formé par le calcium Ca, le strontium Sr, le baryum Ba, le lanthane La, le praséodyme Pr, le néodyme Nd, le bismuth Bi, le cérium Ce, et leurs mélanges, et
• l'élément B au site B de la structure pérovskite est choisi dans le groupe $G_B''(1)$ formé par les mélanges de cobalt et de fer $Co_x Fe_{1-x}$, avec x compris entre 0,5 et 0,95, les mélanges de cobalt et de manganèse $Co_x Mn_{1-x}$, avec x compris entre 0,5 et 0,95, les mélanges de cobalt et de chrome $Co_x Cr_{1-x}$, avec x compris entre 0,5 et 0,95, les mélanges de cobalt et de nickel $Co_x Ni_{1-x}$, avec x compris entre 0,5 et 0,95, les mélanges de cobalt et de titane $Co_x Ti_{1-x}$, avec x compris entre 0,5 et 0,95, les mélanges de cobalt et de cuivre $Co_x Cu_{1-x}$, avec x compris entre 0,5 et 0,95, le cobalt, et leurs mélanges,

- les oxydes de structure spinelle $CD_2O_4$ ou $D(C,D)O_4$ tels que

• l'élément C est choisi dans le groupe $G_C''(1)$ formé par le nickel Ni dans une fraction molaire comprise entre 0 et 0,2, le zinc Zn dans une fraction molaire comprise entre 0 et 0,2, le cobalt Co dans une fraction molaire comprise entre 0,4 et 1, l'étain Sn dans une fraction molaire comprise entre 0 et 0,2 et dans une fraction molaire égale à 1, les mélanges de cobalt et de zinc, et leurs mélanges, et
• l'élément D est choisi dans le groupe $G_D''(1)$ formé par le chrome Cr dans une fraction molaire comprise entre 0 et 0,4, l'aluminium Al dans une fraction molaire comprise entre 0 et 1, le titane Ti dans une fraction molaire comprise entre 0 et 1, le cobalt dans une fraction molaire égale à 1 sauf si l'élément C est le cobalt, les mélanges d'aluminium et de chrome, et leurs mélanges,

- les orthosilicates de zirconium et de vanadium $(Zr,V)SiO_4$,
ou
dans lequel le matériau des particules dudit pigment est choisi parmi
- les oxydes de structure pérovskite $ABO_3$ tels que

• l'élément A au site A de la structure pérovskite est choisi dans le groupe $G_A'''(1)$ formé par le calcium Ca, le strontium Sr, le baryum Ba, le lanthane La, le praséodyme Pr, le néodyme Nd, le bismuth Bi, le cérium Ce, et leurs mélanges, et
• l'élément B au site B de la structure pérovskite est choisi dans le groupe $G_B'''(1)$ formé par les mélanges de chrome et de fer $Cr_x Fe_{1-x}$, avec x compris entre 0,5 et 0,95, les mélanges de chrome et de manganèse $Cr_x M_{n1-x}$, avec x compris entre 0,5 et 0,95, les mélanges de chrome et de cobalt $Cr_x Co_{1-x}$, avec x compris entre 0,5 et 0,95, les mélanges de chrome et de nickel $Cr_x Ni_{1-x}$, avec x compris entre 0,5 et 0,95, les mélanges de chrome et de titane $Cr_x Ti_{1-x}$, avec x compris entre 0,5 et 0,95, les mélanges de chrome et de cuivre $Cr_x Cu_{1-x}$, avec x compris entre 0,5 et 0,95, les mélanges de nickel et de fer $Ni_x Fe_{1-x}$, avec x compris entre 0,5 et 0,95, les mélanges de nickel et de manganèse $Ni_x Mn_{1-x}$, avec x compris entre 0,5 et 0,95, les mélanges de nickel et de cobalt $Ni_x Co_{1-x}$, avec x compris entre 0,5 et 0,95, les mélanges de nickel et de titane $Ni_x Ti_{1-x}$, avec x compris entre 0,5 et 0,95, le chrome, le nickel, et leurs mélanges,

- les oxydes de structure spinelle $CD_2O_4$ ou $D(C,D)O_4$ choisis dans le groupe formé par $CoCr_2O_4$, $TiCo_2O_4$, et leurs mélanges,
ou
dans lequel le matériau des particules dudit pigment est choisi parmi les oxydes de structure pérovskite $ABO_3$ tels que

• l'élément A au site A de la structure pérovskite est choisi dans le groupe $GA^{4'}(1)$ formé par le calcium Ca, le strontium Sr, le baryum Ba, le lanthane La, le praséodyme Pr, le néodyme Nd, le bismuth Bi, le cérium Ce, et leurs mélanges, et

• l'élément B au site B de la structure pérovskite est choisi dans le groupe GB$^{4'}$(1) formé par les mélanges de chrome et de cobalt Cr$_x$ Co$_{1x}$, avec x compris entre 0,3 et 0,8, les mélanges de nickel et de cobalt Ni$_x$ Co$_{1-x}$, avec x compris entre 0,3 et 0,8, les mélanges de chrome et de cuivre Cr$_x$ Cu$_{1-x}$, avec x compris entre 0,3 et 0,8, les mélanges de nickel et de cuivre Ni$_x$ Cu$_{1-x}$, avec x compris entre 0,3 et 0,8, les mélanges de nickel et de titane Ni$_x$ Ti$_{1-x}$, avec x compris entre 0,3 et 0,8, le cuivre, et leurs mélanges,

ou
dans lequel le matériau des particules dudit pigment est choisi parmi
- les oxydes de structure pérovskite ABO$_3$ tels que

• l'élément A au site A de la structure pérovskite est choisi dans le groupe GA$^{5'}$(1) formé par le calcium Ca, le strontium Sr, le baryum Ba, le lanthane La, le praséodyme Pr, le néodyme Nd, le bismuth Bi, le cérium Ce, et leurs mélanges, et
• l'élément B au site B de la structure pérovskite est choisi dans le groupe G$_B$$^{5'}$(1) formé par le fer,

- les oxydes de structure rutile FO$_2$ tel que F est choisi dans le groupe G$_F$'(1) formé par les mélanges de titane et de chrome et de niobium, les mélanges de titane et de chrome et de tungstène, et leurs mélanges,
ou
dans lequel le matériau des particules dudit pigment est choisi parmi
- les oxydes de structure pérovskite ABO$_3$ tels que

• l'élément A au site A de la structure pérovskite est choisi dans le groupe G$_A$$^{6'}$(1) formé par le calcium Ca, le strontium Sr, le baryum Ba, le lanthane La, le praséodyme Pr, le néodyme Nd, le bismuth Bi, le cérium Ce, et leurs mélanges, et
• l'élément B au site B de la structure pérovskite est choisi dans le groupe G$_B$$^{6'}$(1) formé par formé par les mélanges de chrome et de fer Cr$_x$ Fe$_{1-x}$, avec x compris entre 0,05 et 0,5, les mélanges de nickel et de fer Ni$_x$ Fe$_{1-x}$, avec x compris entre 0,05 et 0,5, les mélanges de manganèse et de fer Mn$_x$ Fe$_{1-x}$, avec x compris entre 0,05 et 0,5, et leurs mélanges, et/ou

- les oxydes de structure spinelle CD$_2$O$_4$ ou D(C,D)O$_4$ choisis dans le groupe formé par Fe(Fe,Cr)$_2$O$_4$, Fe$_2$TiO$_4$, NiFe$_2$O$_4$, (Zn,Fe)Fe$_2$O)$_4$, (Fe,Mn)(Fe,Mn,Cr)$_2$O$_4$, (Zn,Mn)(Mn,Cr)$_2$O$_4$ et leurs mélanges, et/ou
- les oxydes de structure rutile FO$_2$ tels que F est choisi dans le groupe G$_F$"(1) formé par les mélanges de titane et de niobium et de manganèse,
ou
dans lequel le matériau des particules dudit pigment est choisi parmi
- les oxydes de structure spinelle CD$_2$O$_4$ ou D(C,D)O$_4$ tels que

• l'élément C est le zinc Zn, et
• l'élément D est un mélange d'aluminium et de chrome, et/ou

- les oxydes de structure hématite E$_2$O$_3$ tels que l'élément E au site E de la structure hématite est choisi dans le groupe G$_E$(1) formé par les mélanges d'aluminium et de chrome, d'aluminium et de manganèse, et/ou
- les oxydes de structure rutile FO$_2$ tels que F est choisi dans le groupe G$_F$"'(1) formé par les mélanges d'étain et de chrome, et/ou
- les orthosilicates de zirconium dans lesquels se trouve de l'oxyde de fer en inclusion,
ou
dans lequel le matériau des particules dudit pigment est choisi parmi les oxydes de structure pérovskite ABO$_3$ tels que l'élément A au site A de la structure pérovskite est choisi dans le groupe GA$^{7'}$(1) formé par le calcium Ca, le strontium Sr, le baryum Ba, le lanthane La, le praséodyme Pr, le néodyme Nd, le bismuth Bi, le cérium Ce, et leurs mélanges, et l'élément B au site B de la structure pérovskite est choisi dans le groupe G$_B$$^{7'}$(1) formé par les mélanges de cobalt et de manganèse Co$_x$ Mn$_{1-x}$, avec x compris entre 0,05 et 0,2,
ou
dans lequel le matériau des particules dudit pigment est choisi parmi
- les oxydes de structure rutile FO$_2$ tels que F est choisi dans le groupe G$_F$$^{4,}$(1) formé par les mélanges d'étain et de vanadium, et/ou
- les orthosilicates de zirconium et de praséodyme (Zr,Pr)SiO$_4$.

6. Article selon l'une quelconque des revendications précédentes, dans lequel l'oxyde du groupe G$_s$(1) est choisi dans le groupe formé par $Y_2O_3$, $CeO_2$ et leurs mélanges.

7. Article selon l'une quelconque des revendications précédentes, dans lequel l'oxyde du groupe $G_S(1)$ est $Y_2O_3$, la teneur en $Y_2O_3$ étant supérieure à 3 % et inférieure à 8 %, sur la base de la somme de $ZrO_2$, $Y_2O_3$, $Sc_2O_3$, MgO, CaO et $CeO_2$.

8. Article selon l'une quelconque des revendications précédentes, présentant une taille médiane inférieure à 10 $\mu$m.

9. Article selon l'une quelconque des revendications précédentes dans lequel ladite pièce frittée présente une densité supérieure à 98 % de la densité théorique.

10. Article selon l'une quelconque des revendications précédentes, dans lequel la zircone de ladite pièce frittée est constituée pour plus de 80 % en volume, de phase quadratique et/ou cubique, le complément à 100 % étant constitué de phase monoclinique.

11. Article selon l'une quelconque des revendications précédentes, dans lequel ladite pièce frittée présente une surface dont la rugosité Ra est inférieure à 0,05 $\mu$m, ou est comprise entre 0,1 et 0,5 $\mu$m.

12. Article selon l'une quelconque des revendications précédentes, comportant un support sur lequel la pièce frittée est collée, clipsée, cousue, ou insérée en force.

13. Article selon l'une quelconque des revendications précédentes, comportant plusieurs dites pièces frittées, les valeurs de L*, et/ou a* et/ou b* mesurées une première desdites pièces frittées différant de moins de 10 % des valeurs correspondantes mesurées sur une deuxième desdites pièces frittées.

14. Article selon l'une quelconque des revendications précédentes, la teneur en alumine dans ladite pièce frittée étant supérieure à 10%.

15. Procédé de fabrication d'un article décoratif selon l'une quelconque des revendications précédentes, comportant les étapes suivantes :

i) préparation d'un support ;
ii) préparation d'une pièce frittée par un procédé comportant les étapes suivantes :

a) mélange de matières premières pour former une charge de départ ;
b) mise en forme d'une préforme, ou « pièce crue », à partir de ladite charge de départ ;
c) frittage de ladite préforme à une température comprise entre 1200°C et 1500°C de manière à obtenir une pièce frittée ;
la charge de départ étant déterminée en fonction d'une couleur recherchée pour ladite pièce frittée;

iii) optionnellement, vérification de la couleur de ladite pièce frittée, de préférence par mesure d'au moins un, de préférence de tous, les paramètres suivants : L*, a*, et b* ;
iv) fixation, de manière rigide ou amovible, de la pièce frittée sur le support de manière à constituer un article décoratif ;
v) optionnellement, emballage de l'article décoratif.

**EP 2 740 717 A2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010024275 A
- JP 2005306678 B
- JP 2004059374 B

**Littérature non-brevet citée dans la description**

- **BRUNAUER EMMET TELLER.** *Journal of American Chemical Society,* 1938, vol. 60, 309-316
- **M. I. MENDELSON.** Average Grain Size in Polycrystalline Ceramics. *J. Am. Cerm. Soc.,* vol. 52 (8), 443-446